# EUROPEAN PATENT SPECIFICATION

(11) **EP 4 538 224 B1**
(45) Date of publication and mention of the grant of the patent: **26.08.2026**
(21) Application number: 23386095.6
(22) Date of filing: 11.10.2023
(51) Int. Cl.: C01B 3/00, C01B 6/24, C22C 1/02, C22C 33/04, C22C 38/24

(54) **HYDROGEN COMPRESSING TECHNIQUE**
VERFAHREN ZUR WASSERSTOFFKOMPRESSION
TECHNIQUE DE COMPRESSION D'HYDROGENE

(43) Date of publication of application: 16.04.2025
(73) Proprietor: Cyrus S.A. "Lefkippos" Technology Park of Attica - NCSR, 15341 Attica (GR)
(72) Inventor: Christodoulou, Christodoulos Neofytou, 2325 Nicosia (CY)
(74) Representative: Röthinger, Rainer

(56) References cited:
- EP-A1- 4 227 025
- WO-A2-2005/017218
- US-A1- 2022 275 480
- WANG XINHUA ET AL: "A 70 MPa hydrogen-compression system using metal hydrides", INTERNATIONAL JOURNAL OF HYDROGEN ENERGY, vol. 36, no. 15, 1 July 2011 (2011-07-01), AMSTERDAM, NL, pages 9079 - 9085, XP093139996, ISSN: 0360-3199, DOI: 10.1016/j.ijhydene.2011.04.193
- LI H ET AL: "A study on 70MPa metal hydride hydrogen compressor", JOURNAL OF ALLOYS AND COMPOUNDS, ELSEVIER SEQUOIA, LAUSANNE, CH, vol. 502, no. 2, 23 July 2010 (2010-07-23), pages 503 - 507, XP027129939, ISSN: 0925-8388, [retrieved on 20100706]
- MADARIA YOGESH ET AL: "Effect of heat transfer enhancement on the performance of metal hydride based hydrogen compressor", INTERNATIONAL JOURNAL OF HYDROGEN ENERGY, vol. 41, no. 6, 1 February 2016 (2016-02-01), AMSTERDAM, NL, pages 3961 - 3973, XP093139995, ISSN: 0360-3199, DOI: 10.1016/j.ijhydene.2016.01.011

## Description

### Technical Field

The present invention relates to hydrogen compressing systems in general, as well as alloys employed in hydrogen compressing systems and methods of manufacturing such alloys. The present invention further relates to methods of activating such alloys.

### Background

Hydrogen compression systems using metal hydrides and operated in temperature swing operation have the capability of compressing hydrogen to high pressures without moving parts and do not require mechanical energy, but only heat. Especially if a waste heat source is available, this can be an advantage of paramount influence on the overall energy balance of a system. Alternatively, in regions with high solar irradiance, solar heat can be used to achieve a reduction in greenhouse gas emission. Further advantages of such systems are compactness, safety and reliability as well as simplicity in design. Especially solar-thermal processes for hydrogen production usually release substantial amounts of waste heat, such as solar-assisted high temperature electrolysis, water splitting in thermochemical cycles and solar reforming of natural gas. Hence, those processes could be very suitable to be coupled with a Metal Hydride Compressor (MHC).

The working principle of MHCs can be briefly summarized as follows: A reversible reaction is used, in which a solid hydride-forming metal/alloy/intermetallic compound (M) reacts with hydrogen to form a metal hydride (MH). When the hydrogen is bound inside the metal hydride crystal lattice, this is called bulk absorption or simply absorption. The reverse reaction is called desorption. The absorption is exothermic, i.e. it releases heat (Q) and is therefore promoted by low temperatures. For desorption, the contrary is the case. The corresponding reaction is presented in Equation (1): $M \left(s\right) + \frac{x}{2} {H}_{2} ⇌ {MH}_{x} \left(s\right) + Q$

The equilibrium of the reaction is defined by a set of variables, which include hydrogen pressure (p), the concentration of the hydrogen in the solid (C) and the temperature (T). Hence, the characteristics of a given material are usually presented in a Pressure Composition Temperature (PCT) diagram.

The MH materials have in common typical characteristics regarding the change in C with a variation of the pressure. At low hydrogen concentrations in the material (0 ≤ C < a), the concentration changes with C(H) ~ the square root of p(H₂). For higher concentrations (a ≤ C ≤ b) a plateau pressure evolves, i.e. the equilibrium pressure is nearly constant with concentration. For even higher concentrations (C > b), the equilibrium pressure increases asymptotically towards infinite values. The plateau width (b-a) is called the reversible hydrogen capacity. It has been found that the pressure plateau is not actually flat but has a slight slope. This is the case for all real MH systems.

The characteristic curve of an MH material is shifted towards higher pressures for higher temperatures. In MHCs, this effect is used to compress hydrogen. Hydrogen is absorbed at the lower temperature, for example up to a value of 145 I_{H2}/kg_{MH}. It can then be desorbed at the higher temperature down until a concentration of for example 15 I_{H2}/kg_{MH}. The amount of hydrogen that is "pumped" is the mass of metal hydride multiplied with the difference in concentration ΔC, for example 130 I_{H2}/kg_{MH}.

Generally, single stage compression can be employed. With a single MH material, only a periodic operation is possible. In order to allow for continuous operation, two or more MH-containing tanks can be installed in parallel and operated with a phase shift. In order to increase the overall pressure ratio, several MHC stages can be set up in series. If this is done, usually different MH materials can be used for effective compression to high pressures.

The MH materials are a crucial component in the design of MHC, because the corresponding PCT curve has to meet the requirements of the compression process. Furthermore, in multi-stage MHCs, different materials have to be found that can thermally be well connected, i.e. the desorbing pressure of the first stage at the higher temperature has to match the absorbing pressure of the second stage at the lower temperature, the desorbing pressure of the second stage at the higher temperature has to match the absorbing pressure of the third stage at the lower temperature and so forth. Therefore, quite some effort has been put into material characterization in the past and is still ongoing. Some requirements that the MH material should fulfill include the following: the PCT characteristics should allow a compression from the lower pressure to the required higher pressure at the available higher and lower temperatures TL and TH; the reversible storage capacity of the material should be high in order to reduce the necessary material for a given compression capacity; fast kinetics should be available to reduce the required material for a given compression capacity; a low slope of plateau pressure will achieve a high compression ratio; low hysteresis is desired to achieve a high compression ratio; cycle stability is desirable; tolerance on impurities should be high; material availability at required scales at affordable costs should be given.

The article "Design, development, construction and operation of a novel metal hydride compressor" (Karagiorgis et a/., International Journal of Hydrogen Energy, Volume 42, Issue 17, 2017) describes the set up and test of a 6-stage MHC for compression of hydrogen from 7 bar, at which it is supplied, to a pressure of more than 220 bar. The heating medium is water and it is planned to have a temperature of about 80 °C in order to simulate a solar thermal collector. The cooling takes place at around 10 °C.

WO 2021/022331 A1 discloses methods for preparing TiMn-based or TiCrMn-based hydrogen storage alloys capable of absorbing and releasing hydrogen. In preferred methods the TiMn-based or TiCrMn-based hydrogen storage alloys comprise ferrovanadium (VFe).

WO 2012/114229 A1 discloses a MH hydrogen compressor, which is thermally driven and which includes suitably operatively interconnected: at least two compression modules; a gas-distributing system; a heat transfer fluid distributing system including at least four flow switches each of them having one common port which can be alternatively connected to one of three ports; a hot fluid system; a cold fluid system; a heating / cooling conduit; and a control system.

WO 2004/027102 A1 discloses a reversible hydrogen storage alloy capable of absorbing approximately 4 weight percent hydrogen and desorbing up to 2.8 weight percent hydrogen at temperatures up to 100 °C.

WO 2007/018291 A1 discloses a hydrogen-storage alloy having a chemical composition that contains a phase represented by the general formula A₅₋ₓB₁₊ₓC₂₄, wherein A is one or more elements selected among the rare earth elements; B is one or more elements selected from the group consisting of Mg, Ca, Sr, and Ba; C is one or more elements selected from the group consisting of Ni, Co, Mn, Al, Cr, Fe, Cu, Zn, Si, Sn, V, Nb, Ta, Ti, Zr, and Hf; and x is a number in the range of -0.1 to 0.8, the phase having a crystal structure which belongs to the space group R-3m and has lattice constants in which the ratio of the c-axis length to the a-axis length is 11.5-12.5.

EP 3 726 124 A1 discloses a hydrogen storage system for passive discharge of hydrogen without employing heating means. The system comprises a plurality of hydrogen storage tanks each containing at least one MH storage material, a hydrogen flow circuit connected to the storage tanks and a control system including pressure sensors and temperature sensors arranged for measuring the pressure and temperature in each storage tank.

WO 2007/140556 A2 discloses magnesium-based hydrogen storage alloys with addition of transition and rare earth elements that were produced by conventional induction melting and by rapid solidification.

WO 2016/130621 A1 discloses hydrogen storage alloys comprising a) at least one electrochemically active main phase and b) at least one electrochemically active secondary phase; and/or comprising a) at least one main phase, b) a storage secondary phase comprising one or more rare earth elements and c) a catalytic secondary phase. The abundance of the storage secondary phase is > 0.5 wt% and the abundance of the catalytic secondary phase is from about 0.3 to about 15 wt%, based on the alloy.

WO 2023/004000 A1 discloses a non-pyrophoric AB2-type Laves phase hydrogen storage alloy and hydrogen storage systems using the alloy.

EP 2 839 046 A1 discloses a multi-phase MH alloy material which is capable of reversibly absorbing and desorbing hydrogen. The material includes a first main phase or group of phases having an ABₓ type crystalline structure and a second phase which has a concentration of a modifier element therein which is greater than the concentration of the modifier element in the first phase or group of phases.

EP 2 363 375 A1 discloses a composite material for reversibly storing hydrogen and that comprises a hydride and a second component forming a solid multiphase system.

EP 1 993 949 A1 discloses a method of making a powder material for hydrogen storage. The method comprises making a metallic composite material by co-fusion, followed by cooling; and hydrogenating the material, followed by fragmentizing the material into powder form.

EP 2 024 274 A1 discloses a method for preparation of a material adapted to reversible storage of hydrogen. The method includes steps consisting of providing a first powder of a magnesium-based material, hydrogenating the first powder to convert at least part of the first powder into metal hydrides, and mixing the first hydrogenating powder with a second powder additive, the proportion by mass of the second powder in the mix obtained being between 1% and 20% by mass, wherein the additive is formed from an alloy with a centered cubic structure based on titanium, vanadium and at least one other metal chosen from chromium or manganese, and grinding the mix of first and second powders.

EP 1 550 634 A2 discloses a hydrogen storage composition comprising a catalyst composition disposed upon a storage composition. The catalyst composition comprises an alloy of calcium, barium, platinum, palladium, nickel, titanium, chromium, manganese, iron, cobalt, copper, silicon, germanium, rhodium, rhodium, ruthenium, molybdenum, niobium, zirconium, yttrium, barium, lanthanum, hafnium, tungsten, rhenium, osmium, iridium, or a combination comprising at least one of the foregoing metals.

DE 10 2008 047 222 A1 discloses a hydrogen storage comprising an MH and a pressurized container, wherein the MH is selected from among low-temperature hydrides of the general formula Me₁ₓ(Al_{y}H_{z})ₙ, Me is selected from among Sc, Ti, Zr, V, Cr, Mn, Fe, Co, Ni, Cu, Zn, Y, Nb, Mo, La, Ce, Pr and Nd or when x = 2 can also be a mixture of a plurality of metals, x is from 1 to 3, y is from 1 to 2, z is from 4 to 7 and n is from 1 to 7
The article "A 70 MPa hydrogen-compression system using metal hydrides" by X. Wang et al. (International Journal of Hydrogen Energy, 36, 2011, pages 9079-9085) discloses a 70 MPa hydride-based hydrogen compression system, wherein a two-stage compression was adopted with AB₂ type alloys as the compression alloys, wherein the alloys are synthesized from elemental metals. The article "A study on 70 MPa metal hydride hydrogen compressor" by H. Li et al. (Journal of Alloys and Compounds, 502, 2010, pages 503-507) discloses a metal hydride hydrogen compressor which provides hydrogen with pressure of over 70 MPa by using said thermally driven hydride compressor, wherein the hydrogen storage properties of La-Ce-Ca-Ni-Al family AB₅ type and Ti-Zr-Cr-Fe-V family AB₂ type multicomponent alloys, which have been synthesized from elemental metals, have been investigated.

It has been found that the particular input and output pressures of the hydrogen gas and/or hydrogen-comprising gas used for an MHC have to be optimized. Such optimization can include particular structural features of the compressing system as well as particular alloys for the MH to yield highly pressurized hydrogen for effective implementation into present and future hydrogen infrastructure.

### Summary

There is a need for an improved hydrogen compressing system as well as for an improved metal alloy for use in such a system.

In one aspect according to the present disclosure, there is provided an MH compressing system for compressing hydrogen, the system comprising: a plurality of metal-alloy containing tanks each having at least one hydrogen port, the tanks being interconnected via their hydrogen ports in a sequential configuration; one or more members configured for at least one of heating and cooling the plurality of metal-alloy containing tanks, wherein one of the sequentially arranged metal-alloy containing tanks is containing a metal alloy material consisting of Ti, Zr, Cr, Fe and V, and wherein the content of Ti in the metal alloy material is from 0.83/3.00 to 0.87/3.00 based on the atomic composition of the metal alloy material and the content of V in the metal alloy material is from 0.05/3.00 to 0.23/3.00 based on the atomic composition of the metal alloy material; and wherein the metal alloy material is produced using the binary alloys Fe-V, and/or Fe-Ti, and/or Fe-Zr as defined in the claims.

In this aspect, the compressing system utilizes metal alloy materials in order to store hydrogen in the form of one or more MHs using an MH compressing system. The term "metal hydride" as used herein refers to compounds of one or more metal cations (M⁺) and one or more hydride anions (H⁻). When pressurized, most metals can bind strongly with hydrogen, resulting in stable metal hydrides that can be used to store and/or compress hydrogen conveniently on board vehicles or in stationary storage facilities. Examples of known MHs include LaNi₅H₆, MgH₂, and NaAlH₄.

Metal alloys and the corresponding MHs can be solids or liquids, for example powders that are usually stored in tanks. In one variant, the content of V in the metal alloy material is 0.10/3.00 based on the atomic composition of the metal alloy material. Metal alloys that can be used in a tank which is not the one of the sequentially arranged metal-alloy containing tanks containing the specific metal alloy as defined in claim 1 can include the alloys having essentially the following formulae:

Ti_{0.85±0.05}Zr_{0.15±0.05}Cr_{0.95±0.05}Fe_{0.95±0.05}V_{0.10±0.05},

Ti_{0.80±0.05}Zr_{0.20±0.05}Cr_{0.95±0.05}Fe_{1.00±0.05}V_{0.05±0.04}, La_{0.70}Ce_{0.30}Ni_{4.97},

Ti_{0.95±0.05}Zr_{0.05±0.04}Cr_{1.20±0.05}Mn_{0.60±0.05}Co_{0.20±0.05},

Ti_{0.90±0.05}Zr_{0.10±0.05}Cr_{0.90±0.05}Mn_{1.00±0.05}V_{0.10±0.05}, Ti_{0.80}Zr_{0.20}Cr_{0.95}Fe_{0.95}V_{0.10}.

MHs employed in the MHC system of the present disclosure may thus include the above metal alloys and the corresponding hydrides thereof.

MHs that can additionally be employed in the MHC system of the present disclosure, as well as other MHs, as well other methods of manufacturing and activating MHs can also be free of vanadium or contain vanadium in different percentages. That is, the further alloys can furthermore consist in alternative variants of alloys that are essentially free or free of vanadium. Similarly, MHs that are additionally employed in the MHC system of the present disclosure, as well as other MHs, as well other methods of manufacturing and activating MHs can also be free of titanium or contain titanium in different percentages.

Furthermore, MHs that can additionally be employed in the MHC system of the present disclosure, as well as other MHs, as well other methods of manufacturing and activating MHs can also be free of vanadium and free of titanium. Specifically, in other materials and methods, these metals can generally be partially or fully omitted as far as the hydrogen storage properties can be partially or fully maintained. Furthermore, in the materials and method of the present disclosure, these metals can be partially or fully substituted by other metals as far as the hydrogen storage properties can be partially or full maintained and as far as these are within the scope of the claims.

Metal alloys that can be used in a tank which is not the one of the sequentially arranged metal-alloy containing tanks containing the specific metal alloy as defined in claim 1 also include the alloys having essentially the following formulae:

X_{0.85±0.05}Zr_{0.15±0.05}Cr_{0.95±0.05}Fe_{0.95±0.05}X'_{0.10±0.05},

X_{0.80±0.05}Zr_{0.20±0.05}Cr_{0.95±0.05}Fe_{1.00±0.05}X'_{0.05±0.04}, La_{0.70}Ce_{0.30}Ni_{4.97},

X_{0.95±0.05}Zr_{0.05±0.04}Cr_{1.20±0.05}Mn_{0.60±0.05}Co_{0.20±0.05},

X_{0.90±0.05}Zr_{0.10±0.05}Cr_{0.90±0.05}Mn_{1.00±0.05}X'_{0.10±0.05}, X_{0.80}Zr_{0.20}Cr_{0.95}Fe_{0.95}X'_{0.10},

wherein X can be fully or partially omitted or substituted Ti, and wherein X' can be fully or partially omitted or substituted V.

The term "metal alloy" or "metal-alloy" as used herein may refer to a mixture of chemical elements of which at least one is a metal, preferably at least two are a metal, further preferably wherein essentially all chemical elements are a metal. The term "metal" as used herein includes also transition metals, semimetals etc. Unlike chemical compounds with metallic bases, an alloy will retain all the properties of a metal in the resulting material, such as electrical conductivity, ductility, opacity, and luster (i.e. shine, sparkle, gleam; describing the light-reflecting characteristics), but may have properties that differ from those of the pure metals, such as increased strength or hardness.

In an alloy, the atoms are joined by metallic bonding rather than by covalent bonds typically found in chemical compounds. The alloy constituents can be measured by atomic ratios or also by mass percentage, preferably in atomic fraction of the complete alloy. Alloys are usually classified as substitutional or interstitial alloys, depending on the atomic arrangement that forms the alloy. They can be further classified as homogeneous (consisting of a single phase), or heterogeneous (consisting of two or more phases) or intermetallic.

An alloy may be a solid solution of metal elements (a single phase, where all metallic grains (crystals) are of the same composition) or a mixture of metallic phases (two or more solutions, forming a microstructure of different crystals within the metal). Such alloys knowingly can comprise unavoidable impurities, resulting from the environment, the manufacturing process, the processing of the alloy post-synthesis etc.

The term "metal alloy" or "metal-alloy" or "alloy" as used herein may refer to a composition comprising the respective metals as well as unavoidable impurities including residual gases, metals, metalloids and non-metals and oxides thereof. These unavoidable impurities are preferably present in amounts of less than 0.5 weight%, further preferably in amounts of less than 0.5 weight%, further preferably in amounts of less than 0.4 weight%, further preferably in amounts of less than 0.3 weight%, further preferably in amounts of less than 0.2 weight%, further preferably in amounts of less than 0.1 weight%, further preferably in amounts of less than 0.05 weight%, further preferably in amounts of less than 0.02 weight%, further preferably in amounts of less than 0.01 weight%, further preferably the alloys and hydrides thereof are essentially free of or free of unavoidable impurities (i.e. less than 0.005 weight%). As further defined in the claims, one of the sequentially arranged metal-alloy containing tanks of the claimed system is containing a metal alloy material consisting of Ti, Zr, Cr, Fe and V. All weight percentages defined herein refer to the total weight of the respective alloy or hydride thereof.

The term "tank" or "tanks" as used herein may refer to an organic, inorganic, composite or metallic, preferably comprising metallic, further preferably alumina and/or (stainless) steel storage defining a storage volume for storing one or more of metal alloys, metal hydrides, gaseous hydrogen, gas-mixtures comprising hydrogen. Said tank can be a large container for storing liquids or gases. Said tank can thus be in the form of a container, reservoir, vessel, etc. The tank of the present disclosure can consist of a jacketed tube, where the metal hydride is located in the inner tube and a heating/cooling medium (e.g., water) can be guided through between the inner and outer tube. Alternatively or additionally to providing a jacket for enabling provision of a medium, a medium line (e.g., in the form of a coil) can extend within (e.g., through) the tank. Consequently, in order to improve the heat transport inside a packed bed of an MH (e.g. within a tank), a copper and/or stainless-steel tube coil, through which the heating/cooling medium can be guided, can be immersed in the packed bed. Front and rear parts of a tank (e.g. a jacketed tube) can be closed. On the front part a single connection can be located for the hydrogen to enter and exit the inner tube. On the rear part, connections to and from the copper and/or stainless-steel tube coil can be implemented. The outer tube can have connections radially located towards the front and the back for the heating/cooling medium to enter and exit.

A tank of the plurality of tanks of the present disclosure has at least one hydrogen port. The term "port" as used herein may be suitable to connect, preferably gas-tight, a hydrogen source and/or a hydrogen drain to a tank of the present disclosure. The port can be in the form of a connector, valve, link, coupling, or junction. The at least one port further connects a tank of the plurality of tanks with a further tank of the plurality of tanks of the MHC system.

A particular port can allow the unidirectional and/or bidirectional flow of hydrogen or a hydrogen-comprising gas. The port can furthermore be a linear port in order to connect a flow source and a flow pickup. Alternatively, the port can also be a branched port in order to connect one or more flow sources and/or one or more flow pickups. Each port can be configured as an inlet port or an outlet port or can act both as an inlet port and an outlet port (e.g. in an alternating manner, such as periodically).

The plurality of tanks of the present disclosure are connected via the ports in a sequential configuration. That is, a first of the plurality of tanks is connected at least to a second tank of the plurality of tanks. Specifically, the first tank (directly or indirectly via an additional booster) can be connected to the original source of hydrogen or hydrogen-comprising gas, and it can be connected to a second tank of the plurality of tanks. Furthermore, the second of the plurality of tanks is connected to a third tank of the plurality of tanks. In a preferred variant, the plurality of tanks comprises, preferably consists of, six subsequently connected tanks. In other variants, the plurality of tanks may comprise three, four or five tanks or seven or more tanks.

The MHC system of the present disclosure can further comprise one or more jackets configured for at least one of heating and cooling the plurality of metal-alloy containing tanks. The system can comprise a single jacket suitable to heat and/or cool all the tanks of the plurality of tanks. Alternatively, the system can comprise two types of jackets for heating and cooling respectively. The system can also comprise one or more jackets that are suitable to heat and cool the tanks of the plurality of tanks in an alternating manner. For example, for a plurality of tanks comprising six tanks, a first, third and fifth tank can be cooled, whereas simultaneously, a second, fourth and sixth tank can be heated.

The tanks can furthermore be arranged and combined such that tanks which are heated and/or cooled simultaneously are arranged closely with respect to the others such that heating and cooling energy can be utilized more effectively. The jackets can further include isolation in order to further improve energy utilization for heating and cooling the tanks. The jackets can be made of inorganic, organic, composite and/or metallic material that encloses the tanks and, preferably, encloses each individual tank fully in at least the circumferential direction.

The selection of an AB₂ cubic crystal structure MH's compositions as well as AB₅ compositions may depend on the desired technical characteristics (e.g. in terms of PCT), the cost of raw materials of their constituent metallic elements and/or binary alloys in the market.

Relevant characteristics of MHC systems as presented herein include one or more of the Pressure Plateau (PP) at a certain temperature (when using water for heating generally about 10 ⁰C to 80 ⁰C), the maximum absorbed hydrogen concentration (storage capacity in Normal Liters H₂ per kg of MH), the slope of the PP and the hysteresis of the PCT curve during absorption and subsequent desorption. In general, the PP decreases by substituting Zirconium (Zr) by Titanium (Ti). The specific behaviour of an MH alloy is dependent on the specific metal composition of the alloy. Generally, Iron (Fe) increases the PP, the slope of the PCT curve increases undesirably, while hysteresis increases (i.e. worsens). It has been found that small substitutions of iron by Vanadium (Va) can "improve" the hysteresis while the pressure plateau can decrease slightly. Generally, increase of Chromium (Cr) can cause an undesirable increase of the slope of the PCT curve. Therefore, in some variants of the present disclosure, chromium can be kept fixed at ratios of from 0.90/3.00 to 1.20/3.00 of the metal alloys, and can have an optimal value of about 0.95/3.00 atomic ratio.

As far as the cost of raw materials is concerned, one has to have in mind that vanadium and zirconium are more expensive, whereas iron typically is the cheapest metal of a metal alloy comprising Ti, Zr, Cr, Fe and V. Titanium and chromium have an intermediate cost. Therefore, there is a desire to increase iron with respect to chromium and to increase titanium with respect to zirconium, while keeping the vanadium at low levels.

In some examples of the present disclosure, the one of the sequentially arranged metal-alloy containing tanks of metal hydride compressing system is containing a metal alloy material as defined in claim 1, in particular consisting of Ti, Zr, Cr, Fe and V, wherein the content of Ti in the metal alloy material is 0.85/3.00 based on the atomic composition of the metal alloy material.

In some examples, the one of the sequentially arranged metal-alloy containing tanks of MHC system is containing a metal alloy material having the formula Ti_{0.85}Zr_{0.15}Cr_{0.95}Fe_{0.95}V_{0.10}.

In some examples, the MHC system is suitable for providing hydrogen at a pressure up to 550 bar. In such or other examples, water having a temperature ranging from 5 °C to 95 °C may provided in the one or more jackets configured for at least one of heating and cooling the plurality of metal-alloy containing tanks.

In some examples, the MHC system comprises one or more of the following alloys, wherein a sixth one of the sequentially arranged metal-alloy containing tanks contains a metal alloy having the atomic composition Ti_{0.85}Zr_{0.15}Cr_{0.95}Fe_{0.95}V_{0.10}, optionally wherein a fifth one of the sequentially arranged metal-alloy containing tanks contains a metal alloy having essentially the atomic composition Ti_{0.80}Zr_{0.20}Cr_{0.95}Fe_{1.00}V_{0.05}, optionally wherein a first one of the sequentially arranged metal-alloy containing tanks contains a metal alloy having essentially the atomic composition La_{0.70}Ce_{0.30}Ni_{4.97}, optionally wherein a third one of the sequentially arranged metal-alloy containing tanks contains a metal alloy having essentially the atomic composition Ti_{0.95}Zr_{0.05}Cr_{1.20}Mn_{0.60}Co_{0.20}, optionally wherein a second one of the sequentially arranged metal-alloy containing tanks contains a metal alloy having essentially the atomic composition Ti_{0.90}Zr_{0.10}Cr_{0.90}Mn_{1.00}V_{0.10}, optionally wherein a fourth one of the sequentially arranged metal-alloy containing tanks contains a metal alloy having the atomic composition Ti_{0.80}Zr_{0.20}Cr_{0.95}Fe_{0.95}V_{0.10}.

By employing such metal alloy materials according to the present disclosure, an absorption PP of about 7, 20, 50, 90, 120 and 160 bar respectively at 10 °C can readily be achieved.

In a further aspect according to the present disclosure, there is provided the use of a metal alloy material in the MHC as presented herein and as further defined in claim 9. The metal alloy material consists of Ti, Zr, Cr, Fe and V and has a Ti content of from 0.83/3.00 to 0.87/3.00 based on the atomic composition of the metal alloy material, a Zr content of from 0.05/3.00 to 0.25/3.00 based on the atomic composition of the metal alloy material, a Cr content of from 0.85/3.00 to 1.30/3.00 based on the atomic composition of the metal alloy material, and a combined content of two or more of Mn, Co, Fe and V of 0.70/3.00 to 1.20/3.00 based on the atomic composition of the metal alloy material, and the metal alloy material is produced using the binary alloy Fe-V.

The metal alloy material is thus consisting of Ti, Zr, Cr, Fe and V, wherein the content of Ti in the metal alloy material is from 0.83/3.00 to 0.87/3.00 based on the atomic composition of the metal alloy material and the content of V in the metal alloy material is from 0.05/3.00 to 0.23/3.00 based on the atomic composition of the metal alloy material.

In order to achieve effective and efficient hydrogen compressing, adjusting the metal ratios in the metal alloys employed in an MHC system can be crucial. Specifically, AB₅-type materials such alloys comprising La, Ce, Ni can be characterized by the ability to allow reversible storage at temperatures and pressures close to an ambient environment, and are a promising candidate for initial hydrogen compressing steps (e.g., for one or more of the initial tanks, such as for the first and/or the second tank, preferably the first hydrogen compressing tank in a tank sequence of two or more tanks). Such materials can store at least from 1% to 1.4% of hydrogen by weight and also more than 100 kg/m³, which is greater as compared to liquefied hydrogen at 20K (70kg/m³). A representative of AB₅ materials is LaNi₅. Storage properties of LaNi₅ can be tuned by replacing La or Ni atoms with other elements. Specifically, La-Ce-Ni alloys according to the present disclosure can provide further improved hydrogen compressing properties. Without wishing to be bound by theory, the specific cerium substitution of lanthanum in the unit cell can cause the lattice to shrink, and significant changes in the plateau pressures can be obtained. That is, metal alloy materials comprising a La content of from 0.65/5.97 to 0.75/5.97 based on the atomic composition of the metal alloy material, a Ce content of from 0.25/5.97 to 0.35/5.97 based on the atomic composition of the metal alloy material, and a Ni content of from 4.90/5.97 to 5.00/5.97 based on the atomic composition of the metal alloy material can provide improved hydrogen storage properties.

In some examples, the one of the metal alloy materials absorbs hydrogen at a pressure ranging from 5 bar to 15 bar at a temperature ranging from 5 °C to 15 °C and provides a hydrogen pressure ranging from 20 bar to 40 bar at a temperature ranging from 70 °C to 95 °C. Additionally, or alternatively, a metal alloy material in a tank following in sequence the tank with the one of the metal alloy materials absorbs hydrogen pressure ranging from 20 bar to 175 bar at a temperature ranging from 5 °C to 15 °C and provides a hydrogen pressure ranging from 50 bar to 350 bar at a temperature ranging from 70 °C to 95 °C.

The one of the metal alloy materials of the MHC system of the present disclosure preferably can absorb hydrogen at a pressure of 5 to 15 bar at a temperature ranging from 5 °C to 15 °C. However, the metal alloy materials of the MHC system of the present disclosure can absorb hydrogen also at pressures below 5 bar and/or above 15 bar. Similarly, the metal alloy materials of the MHC system of the present disclosure can furthermore absorb hydrogen at temperatures below 5 °C and/or above 15 °C efficiently. For compressing hydrogen using the MHC system of the present disclosure, the pressure of the ab- and desorbed hydrogen can be significantly increased by suitably adjusting employed metal alloy material as well as ab- and desorption temperature of the respective tank(s). By combining materials according to the present disclosure, the pressure of hydrogen can easily be increased without the necessity for moving compressor parts from pressures as low as normal pressure (1 bar) and even lower, such as 0.5 bar, up to desorption pressures of potentially of >500 bar, depending on the employed material and temperature gradients. In some variants, water is used in the heating/cooling jackets, which can provide a cheap and non-toxic heating cycle, wherein the pressure of the desorbed hydrogen (from the system of the present disclosure) can reach up to and including at least 380 bar.

In some examples, the metal alloy material is in the form of particles having a particle size ranging from 0.1 mm to 5 mm, preferably ranging from 0.5 mm to 2.5 mm, further preferably ranging from 0.7 mm to 1 mm.

The intrinsic kinetics of the material (i.e. not taking into account impediments by overall geometry or material particle size) of the present disclosure are sufficiently high but heat transfer into a material bed in a tank can be low due to low thermal conductivity. Usually the thermal conductivity of an MH powder can be around 1 W m⁻¹ K⁻¹. Therefore, some effort is also being made to quantify and improve the thermal conductivity of suitable metal hydrides. Thermal conductivity of the metal alloy materials employed by the present disclosure can be dependent on the intrinsic properties of the material. Thermal conductivity within the MHC system is furthermore influenced by material size, shape, pre-treatment and tank design. In a preferred variant, the particle size of the employed metal alloy material is ranging from 0.1 mm to 5 mm (e.g. 0.5 mm to 2,5 mm). Such particle sizes and granularity provide a stable and efficient gas flow when introducing or removing the hydrogen gas as well as good contact with the tank walls and thus efficient thermal conductivity and from the heating/cooling jacket into the tank. In some examples, at least 50 %, preferably at least 75 %, further preferably at least 85 % of the surface of the particles is ranging from 0.1 mm to 5 mm (e.g. 0.5 mm to 2,5 mm).

In some examples, at least 50 %, preferably at least 75 %, further preferably at least 85 % of the surface of the particles is not occupied with (i.e. essentially free from or free from) chemisorbed or physisorbed species.

The possibility of chemisorption and physisorption of molecular and atomic species on solid-state material surfaces, such as alloys, is well known to the skilled person. In solid-state materials, such as the metal alloy materials of the present disclosure, hydrogen can be absorbed by the physisorption or chemisorption process (as well lower amounts of hydrogen absorbed to surfaces of e.g. alloys and hydrides). In the physisorption process, the absorbed hydrogen binds in molecular form to the surface of host materials through weak interaction (absorption energy ~0.1-0.8 eV/H₂). However, in the chemisorption process, the H₂ molecules dissociate into individual hydrogen atoms and migrate to host materials by producing a strong chemical bond (with a binding energy of >1 eV/H₂) with the host atoms.

Another type of absorption process observed is similar to the physisorption, in which the inter-atomic H-H single bond in the H₂ molecule is elongated but not dissociated and absorbed by Kubas-type orbital interactions. It enhances the H₂ absorption energy and makes most of the H₂ surface storage capacities. The metal alloy materials of the present disclosure and provided by the manufacturing and activation process of the present disclosure results in materials, wherein a majority of the surface of the metal alloy material surface is not occupied with chemisorbed or physisorbed species. Therefore, the MHC system of the present disclosure provides superior absorption capacities and thus increased amounts of hydrogen can possibly be stored due to the accessible surface area.

In some examples, the one of the metal alloy materials exhibits a hydrogen absorption PP, measured at 10 °C, of
a. 5 bar to 10 bar, preferably 6 bar to 8 bar, wherein the metal alloy material in a subsequent metal alloy-containing tank exhibits a hydrogen absorption pressure plateau, measured at 10 °C, of
b. 14 bar to 24 bar, preferably 15 bar to 20 bar,
c. 40 bar to 60 bar, preferably 45 bar to 55 bar,
d. 80 bar to 100 bar, preferably 85 bar to 95 bar,
e. 105 bar to 130 bar, preferably 110 bar to 125 bar, or
f. 150 bar to 170 bar, preferably 150 bar to 165 bar, optionally
wherein the one of the metal alloy materials exhibits a hydrogen desorption pressure plateau, measured at 80 °C, of
a. 15 bar to 40 bar, preferably 20 bar to 30 bar, wherein a metal alloy material following in sequence to the one of the metal alloy materials exhibits a hydrogen desorption pressure plateau, measured at 80 °C, of
b. 60 bar to 80 bar, preferably 55 bar to 75 bar,
c. 110 bar to 130 bar, preferably 115 bar to 125 bar,
d. 170 bar to 190 bar, preferably 175 bar to 185 bar,
e. 240 bar to 280 bar, preferably 250 bar to 270 bar, or
f. 340 bar to 380 bar, preferably 350 bar to 370 bar.

Generally, metal alloy materials that can be used in a tank which is not the one of the sequentially arranged metal-alloy containing tanks containing the specific metal alloy as defined in claim 1 can essentially have the atomic composition La_{0.70}Ce_{0.30}Ni_{4.97}, or Ti_{0.90}Zr_{0.10}Cr_{0.90}Mn_{1.00}V_{0.10}, or Ti_{0.95}Zr_{0.05}Cr_{1.20}MN_{0.60}Co_{0.20}, Ti_{0.80}Zr_{0.20}Cr_{0.95}Fe_{0.95}V_{0.10}, or Ti_{0.80}Zr_{0.20}Cr_{0.95}Fe_{1.00}V_{0.05}, or Ti_{0.85}Zr_{0.15}Cr_{0.95}Fe_{0.95}V_{0.10}. In a further aspect according to the present disclosure, there is provided the use of the metal alloy material according to the present disclosure in a MHC system for compressing hydrogen.

In a further aspect according to the present disclosure, there is provided a method of manufacturing a metal alloy material as defined in any of claims 9 to 11, the method comprising:
a) melting the respective elements and the binary alloy Fe-V at a temperature ranging from 900 °C to 2000 °C, optionally by arc-melting or induction melting methods under protective atmosphere in vacuum and/or argon gas,
b) cooling the resulting melt to yield a bulk metal-alloy material,
c) crushing the bulk metal alloy material to produce metal alloy material particles using a first type of crusher,
d) separating particles having a particle size of less than 1 mm and storing the separated particles in protective gas atmosphere, and
e) repeating steps c and d using a second type of crusher.

Generally, bulk metal hydride alloys can be produced by melting of their constituent elements or respective alloys, according to their wt% composition.

The heating is performed in protective gas atmosphere, preferably an argon-containing atmosphere, preferably in argon. The heating can also be performed in vacuum. The heating is performed in such atmospheres in order to avoid oxidation of the metal (alloys). Thereby, oxide-species can essentially be avoided which are not suitable for efficiently storing hydrogen.

Crushers suitable for using in the method according to the present disclosure include one or more of gyratory crushers, jaw crushers, hammermills, horizontal shaft impact crushers, sizers, roll crushers, cone crushers, feeder-breakers. Generally, bulk alloys can be crushed in a jaw crusher producing particles having a certain maximum size, for example less than 4 mm. Particles less than a particular threshold (such as 1 mm (e.g. passing through 1 mm sieves)) can be separated and kept under argon gas atmosphere.

Particles of more than 1 mm and less than 4 mm may be further crushed in a roller-crusher set at 1 mm spacing, preferably under argon-gas atmosphere in order to avoid extensive oxidation and particles burning, and eventually to produce particles with less than 1 mm in size. All sieved particles with less than 1 mm size may be kept under argon gas atmosphere for further processing and usage (e.g. for one or both of activation and charging).

In general, the particles smaller than 1 mm are surface-contaminated by physisorbed moisture and chemisorbed species, such as, OH-, O=, -CH2- and other species existing in the atmosphere.

The particles can be separated according to their size by methods including sieving, sifting screening and combinations thereof. After preparation and separation of the particles, these may be stored in protective gas atmosphere in order to avoid contamination and/or oxidation of the resulting alloys.

In some examples, the first type of crusher is a jaw type crusher, and/or wherein the second type of crusher is a roller-crusher set.

The combination of a jaw type crusher and/or a roller crusher set provides a fast and effective method in order to yield homogeneously formed and sized particles.

In some examples, the protective gas atmosphere is an atmosphere that is at least one of argon-rich and nitrogen-rich, preferably wherein the protective gas atmosphere consists essentially of argon gas.

By using the protective atmospheres according to the present disclosure, contamination and/or oxidation of the particles can essentially be avoided.

In some examples, the particles are separated by sieving. Sieving the particles allow for a swift and effective size separation of the particles without affecting the surface properties of the material.

In a further aspect according to the present disclosure, there is provided an activation process of metal alloy material inside a metal hydride compressor. The activation process comprises:
a) providing the metal alloy material according to the present disclosure inside a metal-alloy containing tank,
b) applying vacuum at a pressure level of less than 10⁻² bar for a period of 5 minutes or more,
c) heating the metal-alloy containing tank to a temperature ranging from 50 °C to 100 °C,
d) introducing hydrogen into the metal-alloy containing tank at a pressure ranging from 1 bar to 600 bar, and
e) cooling the metal-alloy containing tank to a temperature of 20 °C or lower as defined in the claims.

In some examples, the activation process further comprises step f) thermal cycling of the metal-alloy containing tank, the thermal cycling comprising heating the metal-alloy containing tank to a temperature ranging from 50 °C to 100 °C and cooling the metal-alloy containing tank to a temperature of 20 °C or lower. In some examples, each heating and cooling step proceeds for 10 minutes to 30 minutes, preferably 15 minutes.

In some examples, vacuum is applied in step b for a period of 10 minutes or more, preferably 20 minutes or more, further preferably 30 minutes or more.

In some examples, vacuum is applied at a pressure level of less than 10⁻² bar, preferably less than 0.5*10⁻² bar, further preferably less than 10⁻³ bar.

In some examples, the hydrogen is introduced into the metal-alloy containing tank at a pressure ranging from 50 bar to 400 bar, preferably 100 bar to 250 bar, further preferably, wherein the hydrogen is introduced into the metal-alloy containing tank using a booster.

The metal alloy material is manufactured as defined in the claims, i.e. according to the present disclosure.

The activation process is performed using the MHC system according to the present disclosure as defined in the claims. By employing the activation process according to the present disclosure using materials according to the present disclosure, the accessible surface of the absorbing material can be maximized, thereby further improved the hydrogen compressing efficiency.

### Brief Description of the Drawings

Further aspects, details and advantages of the present disclosure will become apparent from the detailed description of exemplary embodiments below and from the drawings, wherein:
- Figure 1: shows a schematic diagram of a metal hydride compressor (MHC) system.
- Figure 2: shows the two main operating phases of the MHC system of Fig. 1.
- Figure 3: shows the effect of Fe substitution by V in an alloy on the PCT characteristics at 10 °C.
- Figure 4: shows the effect of Zr substitution by Ti on the PCT characteristics at 10 ⁰C, for Cr atomic ratio of about 0.95/3.00, iron atomic ratio of about 1.00/3.00 and vanadium atomic ratio of about 0.05/3.00.
- Figure 5: shows the effect of Zr substitution by Ti on the PCT characteristics at 10⁰C, for Cr atomic ratio of about 0.95/3.00, iron atomic ratio of 0.95/3.00 and vanadium atomic ratio of 0.10/3.00.
- Figure 6A: shows a theoretical representation of a "dirty" surface of a metal alloy.
- Figure 6B: shows a theoretical representation of a "clean" surface of a metal alloy.
- Figure 7: shows an exemplary activation system for metal alloys, configured to be coupled to the MHC system of Figure 1.

### Detailed Description

In the following description, for purposes of explanation and not limitation, specific details are set forth in order to provide a thorough understanding of the present disclosure. It will be apparent to one of skill in the art that the present disclosure may be practiced in other embodiments that depart from these specific details.

In the following embodiments, the hydrogen compressing potential of MHC systems comprising a plurality of tanks can be fully utilized by employing particular metal alloys having particular metal ratios which optimize pressure differences of input and output of hydrogen gas and/or hydrogen-comprising gases. Specifically, in one embodiment, there is provided an MHC system for compressing hydrogen. The system comprises a plurality of metal-alloy containing tanks (e.g., four to eight and in particular six tanks), each having at least one hydrogen port (e.g., each having an inlet port and an outlet port). The tanks are interconnected via their hydrogen ports in a sequential configuration. The MHC system further comprises one or more jackets configured for at least one of heating and cooling the plurality of metal-alloy containing tanks, wherein one of the sequentially arranged metal-alloy containing tanks contains a metal alloy material consisting of Ti, Zr, Cr, Fe and V, and wherein the content of Ti in the metal alloy material is from 0.83/3.00 to 0.87/3.00 based on the atomic composition of the metal alloy material and the content of V in the metal alloy material is from 0.05/3.00 to 0.23/3.00 based on the atomic composition of the metal alloy material and the metal alloy material is produced using the binary alloys Fe-V, and/or Fe-Ti, and/or Fe-Zr as defined in the claims. The content of V in the metal alloy material in one example is from about 0.07/3.00 to about 0.20/3.00 based on the atomic composition of the metal alloy material. Preferably, the content of V in the metal alloy material is from about 0.085/3.00 to about 0.15/3.00 based on the atomic composition of the metal alloy material. More preferably, the content of V in the metal alloy material is about 0.10/3.00 based on the atomic composition of the metal alloy material.

While a single stage compression with an MH can generally be employed, in accordance with the present disclosure, combining a plurality of metal alloy materials in a plurality of tanks can provide a pressure increase of up to 400 bar (when desorbed at elevated temperature of about 80 °C), while starting from hydrogen at low pressures. Furthermore, it can usually be seen that the PP is not actually flat but has a slight slope. This is the case for all real MHC systems. With a single MH material, only a periodic operation is possible. In order to allow for continuous operation and in order to increase pressures, two or more tanks (e.g. containers, vessels etc.) can be installed in parallel and operated with a phase shift. In order to increase the overall pressure ratio further, several MHC stages can be set up in series. If this is done, usually different MH materials have to be used for effective compression to high pressures as provided in embodiments of the present disclosure.

Furthermore, in some cases, an alloy may reduce the overall cost of the material while preserving important properties. In such or other cases, the metal mixture may additionally impart synergistic properties to the constituent metal elements such as absorption capacity, corrosion resistance or mechanical strength.

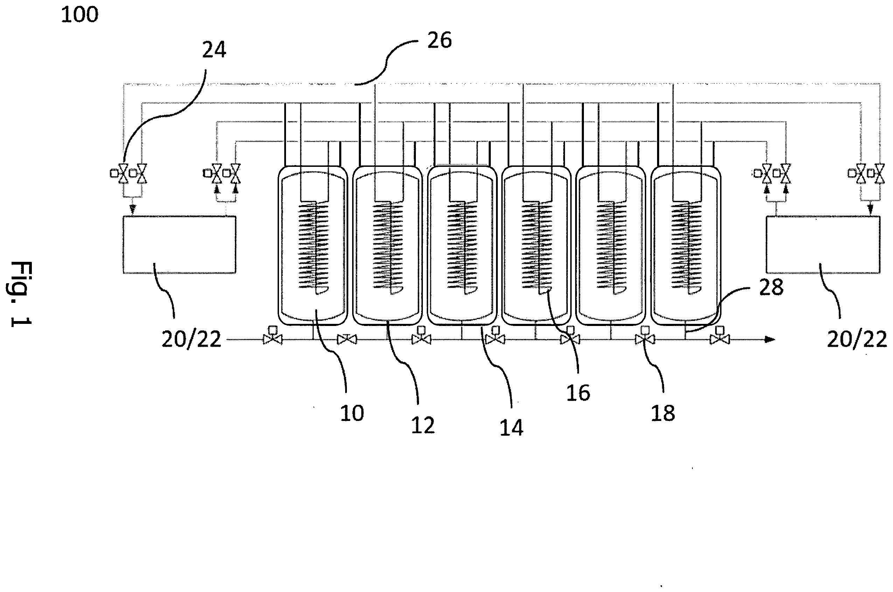

Figure 1 shows an embodiment of an exemplary MHC system 100. The MHC system 100 of Figure 1 comprises a plurality of tanks 10 arranged, from a perspective of the hydrogen flow (see arrow in Figure 1), in series to define a set of subsequent hydrogen compression stages yielding increasingly higher hydrogen output pressures. The exemplary MHC system 100 of Figure 1 comprises six tanks 10 and, thus, six compression stages. However, the present disclosure is not limited to a number of six serially arranged tanks 10 but can generally comprise for example two or more tanks 10, such as three, four, five, six, seven, eight, nine etc. (and a corresponding number of compression stages),
Each of the tanks 10 in Figure 1 comprises one hydrogen port 12. Each of the tanks can also comprise more than one hydrogen port 12 to allow for faster distribution of the hydrogen throughout the tank. In more detail, the tanks 10 are interconnected via their respective hydrogen ports 12 in series. An electrically controllable valve 18 is provided in a hydrogen line interconnecting one of the tanks 10 with its immediately succeeding tank 10. An additional such valve 18 is connected in a supply line leading from an original hydrogen source (e.g., an electrolysis system, not shown in Figure 1) to the hydrogen port 12 of the first tank 10 in the tank sequence, and a further such valve 18 is connected in a discharge line connecting the last tank 10 in the tank sequence (see arrow in Figure 1) to a hydrogen drain (e.g., a high-pressure hydrogen storage).

Each of the hydrogen ports 12 is configured to alternatingly act as an input port and an output port. In other configurations, a dedicated input port and a dedicate output port may be provided per tank 10 (not shown), with a corresponding adaptation of the arrangement of the valves 18 being made. A controller (not shown) is configured to control the state (open/closed) of the valves 18 in a synchronized manner so that the hydrogen pressurized in a preceding tank 10 can flow into the subsequent tank 10 (as well as from the hydrogen source into the first tank 10 and from the last tank 10 into the high-pressure hydrogen storage).

The MHC system 100 exemplary shown in Figure 1 further comprises one or more jackets 14 for alternatingly accommodating a heating medium and a cooling medium so as to cool the tanks 10. The exemplary MHC system 100 of Figure 1 comprises one jacket 14 surrounding each tank 10. In more detail, each tank 10 is configured as a jacketed tube. However, in other embodiments one jacket 14 can also surround a plurality of tanks 10. In other embodiments, more than one tank, such as two or more tanks, three or more tanks, four or more tanks, five or more tanks, six or more tanks, etc., or each tank, can be surrounded by a jacket 14. The jackets 14 can be fluidly connected via external lines 26 to allow for a flow of the heating medium and the cooling medium in parallel through multiple jackets 14.

In the jacketed tubes used as tanks 10 according to one exemplary realization, the metal alloy is located in an inner tube and the heating/cooling medium, preferably water, runs through a space (i.e. jacket 14) between the inner and an outer tube. The front and rear ends of each jacketed tube can be closed and/or sealed.

In addition or as an alternative to the jackets 14, to facilitate thermal treatment inside a packed bed of metal alloy, internal lines 16 are provided within the tanks for alternatingly accommodating a heating medium and a cooling medium. In the example of Figure 1, one such line 16 is provided in each tank 10 in direct contact with the metal alloy. Each line 16 may be configured as a coil (e.g., made from copper) capable of guiding a heating and/or cooling medium through (into and out of) the respective tank 10. Sets of lines 16 are configured to be fluidly connected by the external lines 26 (e.g., pipes or tubes) to allow for a flow of the heating medium and the cooling medium in parallel through multiple internal lines 16. Similar external lines 26 are provided for the same purpose for the jackets 14, as described above.

On the front end of each jacketed tube, a single hydrogen port 12 is located for the hydrogen to enter and exit the inner tube. On the rear end of each jacketed tube, one or more connections to and from the jackets 14 and from and to the lines 16 are provided for the cooling medium and the heating medium. These connections serve to fluidly connect the jackets 14 and lines 16 to the external lines 26, and to sources/drains of a cooling medium and a heating medium, respectively.

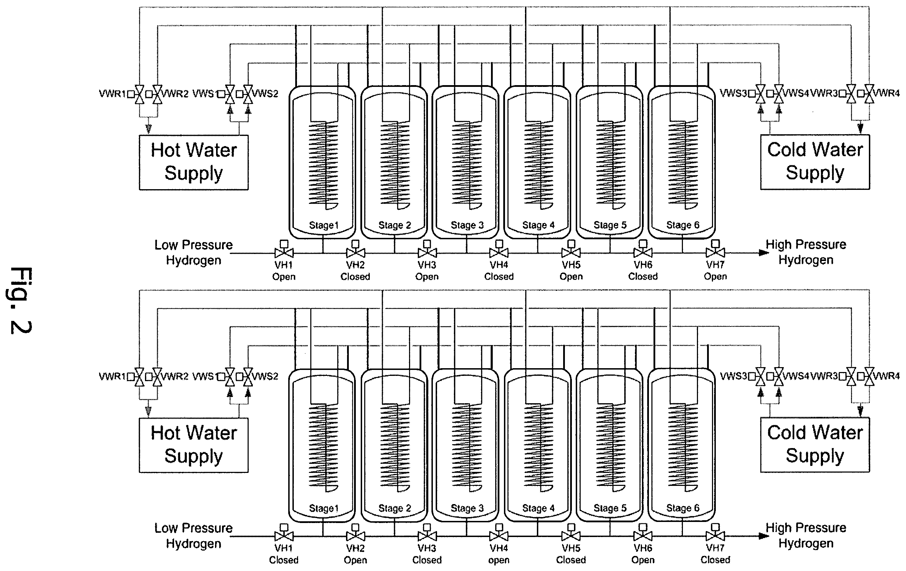

In the embodiment of Figure 1, a dedicated heating medium (hot water) supply 20 and a dedicated cooling medium (cool water) supply 22 are provided. A set of electrically controllable valves 24 allows to alternatingly circulate the heating medium and the cooling medium though dedicated sub-sets of the tanks (i.e., through the associated jackets 14 and internal lines 16). In this regard, Figure 2 illustrates the two main operational phases of the MHC system 100.

In the operational phase illustrated on the top of Figure 2, the tanks 10 of compression stages 1, 3 and 5 are cooled while the tanks 10 of compression stages 2, 4 and 6 are heated (phase 1). In this phase, out of all the valves 24, VWR1, VWS1, VWS3 and VWR3 are open, while the others are closed. On the hydrogen side, it is shown which valves 18 are open and closed. The tanks 10 of the compression stages that are cooled absorb hydrogen, and those that are heated desorb hydrogen. In the operational phase illustrated on the bottom of Figure 2, out of the valves 24, VWR2, VWS2, VWS4 and VWR4 are open, while the others are closed. This means that the tanks 10 of compression stages 1, 3 and 5 are heated, while the tanks of compression stages 2, 4 and 6 are cooled. On the hydrogen side, it is again shown which valves 18 are open and closed.

It can be seen that the overall MHC system 100 only takes up and releases hydrogen in operational phase 1, not in operational phase 2. As already mentioned, this is the case for any MHC system 100 with only one hydrogen compression line. In order to achieve a continuous supply of high-pressure hydrogen, two or more of the setups illustrated in Figure 1 and Figure 2 have to be operated in parallel and with a phase shift. It should be noted that Figure 1 and Figure 2 are only supposed to illustrate the interconnection between the different tanks 10 and the related valve set up, but not the actual system configuration.

At least one of the sequentially arranged metal-alloy containing tanks 10, such as the last tank 10 in sequence (i.e. compression stage 6), contains a metal alloy material consisting of Ti, Zr, Cr, Fe and V, wherein the content of Ti in the metal alloy material is from 0.83/3.00 to 0.87/3.00 based on the atomic composition of the metal alloy material and the content of V in the metal alloy material is from 0.05/3.00 to 0.23/3.00 based on the atomic composition of the metal alloy material as further defined in the claims.

Generally, other metal alloy materials that can be used in a tank which is not the one of the sequentially arranged metal-alloy containing tanks containing the specific metal alloy as defined in claim 1 and as stored in one or more of the tanks 10, such as one or more of the first three tanks 10 in sequence, can comprise a La content of from 0.65/5.97 to 0.75/5.97 based on the atomic composition of the metal alloy material, a Ce content of from 0.25/5.97 to 0.35/5.97 based on the atomic composition of the metal alloy material, and a Ni content of from 4.90/5.97 to 5.00/5.97 based on the atomic composition of the metal alloy material. Alternatively, or in addition, a further metal alloy material in one or more of the tanks 10, such as one or more of the second to fifth tanks 10, can comprise a Ti content of from 0.75/3.00 to 1.00/3.00 based on the atomic composition of the metal alloy material, a Zr content of from 0.05/3.00 to 0.25/3.00 based on the atomic composition of the metal alloy material, a Cr content of from 0.85/3.00 to 1.30/3.00 based on the atomic composition of the metal alloy material, and a combined content of two or more of Mn, Co, Fe and V of 0.70/3.00 to 1.20/3.00 based on the atomic composition of the metal alloy material.

In one concrete realization, the first of the six sequentially arranged metal-alloy containing tanks 10 (i.e. the tank 10 of compression stage 1) contains a metal alloy having essentially the atomic composition La_{0.70}Ce_{0.30}Ni_{4.97}. The second of the sequentially arranged metal-alloy containing tanks 10 (i.e. the tank 10 of compression stage 2) contains a metal alloy having essentially the atomic composition Ti_{0.90}Zr_{0.10}Cr_{0.90}Mn_{1.00}V_{0.10}. The third of the sequentially arranged metal-alloy containing tanks 10 (i.e. the tank 10 of compression stage 3) contains a metal alloy having essentially the atomic composition Ti_{0.95}Zr_{0.05}Cr_{1.20}Mn_{0.60}Co_{0.20}. The fourth of the sequentially arranged metal-alloy containing tanks 10 (i.e. the tank 10 of compression stage 4) contains a metal alloy having the atomic composition Ti_{0.80}Zr_{0.20}Cr_{0.95}Fe_{0.95}V_{0.10}. The fifth of the sequentially arranged metal-alloy containing tanks 10 (i.e. the tank 10 of compression stage 5) contains a metal alloy having essentially the atomic composition Ti_{0.80}Zr_{0.20}Cr_{0.95}Fe_{1.00}V_{0.05}. The sixth (i.e. last) of the sequentially arranged metal-alloy containing tanks 10 (i.e. the tank 10 of compression stage 6) contains a metal alloy having the atomic composition Ti_{0.85}Zr_{0.15}Cr_{0.95}Fe_{0.95}V_{0.10}. In the present configuration, only a single metal alloy type is contained in each tank 10, although in other configurations two or more metal alloy types may be contained in each tank 10.

It has been found that small substitutions of Fe by V in alloys as used herein can reduce the hysteresis while at the same time the pressure plateau will decrease slightly. Generally, an increase of Cr can cause an undesirable increase of the slope of the PCT curve. Therefore, in the one or more of the alloys used in the MHC system 100, Cr has kept fixed at ratios of from 0.90/3.00 to 1.20/3.00 of the metal alloys, and was found to have an optimal value of about 0.95/3.00 atomic ratio. As far as the cost of raw materials is concerned, V and Zr are the most expensive materials. Therefore, in one or more of the alloys used in the MHC system 100, the Fe content was increased with respect to the Cr content and the Ti content was increased with respect to the Zr content, while keeping V at low levels. The alloys used in the MHC system 100 allow for compressing hydrogen to a resulting pressure of up to at least 380 bar, while operating in a moderate temperature regime that can easily be controlled by using water as a heating and/or cooling medium (e.g., in a temperature regime between 5 °C and 90°C, in particular between 10 °C and 80°C). At the same time, the MHC system 100 as presented herein employs alloys having a high content of inexpensive components such as iron.

The combination of metals as employed by the present alloys allow to vary (increase or decrease) the pressure plateau while retaining a low (i.e. improved) hysteresis and high hydrogen concentrations. For example, by increasing the Fe atomic content in known alloys, the pressure plateau can increase but the hysteresis can worsen. The hysteresis can be optimized as shown by the present invention by variation in particular of the vanadium atomic content. Furthermore, also by increasing the Ti/Zr atomic ratio, the pressure plateau can increase but the activation of the material can become more difficult or even impossible at particular extreme ratios. On the other hand, by decreasing the Ti/Zr atomic ratio, activation can be easier but the hysteresis may worsen. The present invention thus provides a combination of combined variation of Ti/Zr atomic ratio and the rest of the metals as defined in the claims, including Vanadium, in order to achieve the desired properties, that are in particular the pressure plateau, low hysteresis and high hydrogen concentrations.

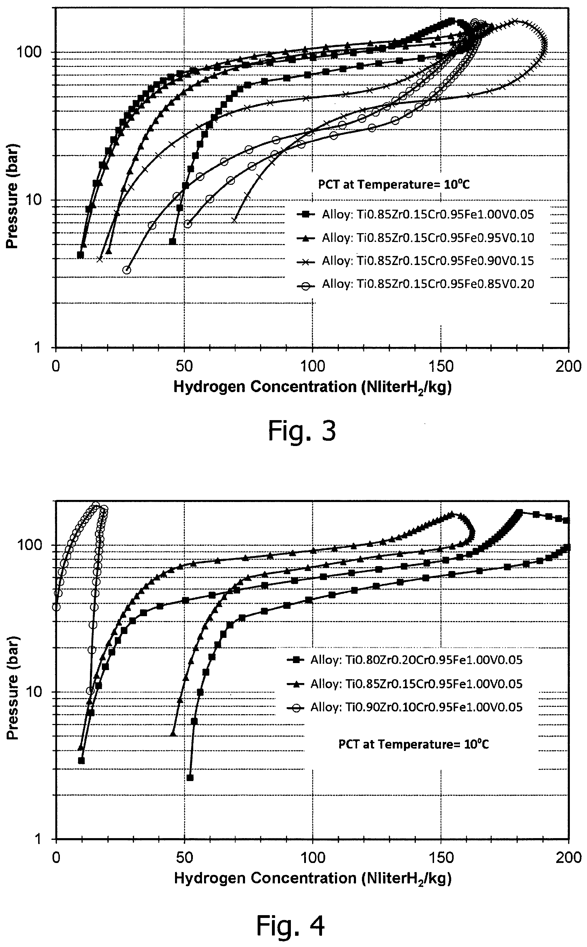

Figure 3 shows the effect of Fe substitution by V in an alloy on the PCT characteristics at 10 °C. For constant Ti, Zr and Cr atomic compositions, there is an optimal V concentration of about 0.10/3.00 atomic ratio, at which the PCT curve exhibits the best characteristics (high PP, high storage capacity, low PCT slope and low hysteresis) while retaining the V and Fe concentrations at low levels of about 0.10/3.00 atomic ratio and high levels of 0.95/3.00 atomic ratio, respectively, therefore potentially achieving low cost while providing good compressing properties.

By varying the V concentration below and/or above the crucial value of about 0.10/3.00 atomic ratio, the PCT characteristics worsen (lower PP, higher PCT slope and higher hysteresis). Therefore, the composition of Ti_{0.85}Zr_{0.15}Cr_{0.95}Fe_{0.95}V_{0.10} is found to be technically advantageous, exhibiting high PP, high storage capacity, low PCT slope, low hysteresis and potentially low cost while providing good compressing properties.

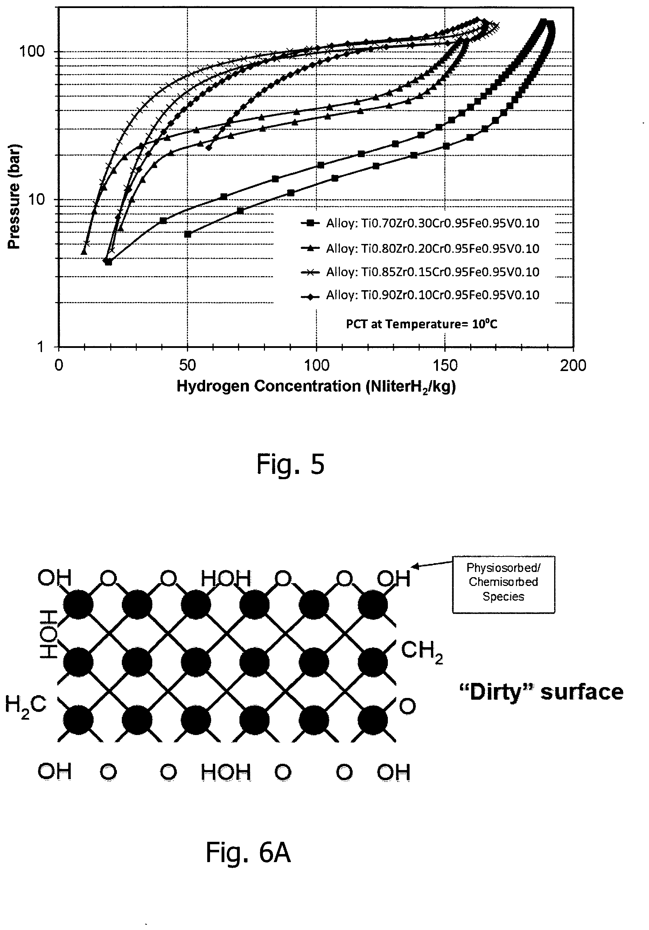

The effect of Zr substitution by Ti on the PCT characteristics is shown in Figures 4 and 5. For constant Cr, Fe and V atomic compositions, there is an optimal Ti concentration of about 0.85/3.00 atomic ratio (Zr concentration of about 0.15/3.00 atomic ratio), at which the PCT curve exhibits the desired characteristics (high PP, high storage capacity, low PCT slope and low hysteresis) while retaining the Zr concentrations at low levels of about 0.15/3.00 atomic ratio, therefore potentially achieving low cost. Furthermore, by employing such metal alloy materials according to the present disclosure, absorption PP of about 7, 20, 50, 90, 120 and 160 bar respectively at 10 °C can readily be achieved.

By varying the Ti concentration below and/or above the crucial value of about 0.85/3.00 atomic ratio, the PCT characteristics worsen (lower PP, higher PCT slope and higher hysteresis). Therefore, the composition of Ti_{0.85}Zr_{0.15}Cr_{0.95}Fe_{0.95}V_{0.10} is found to be technically advantageous, exhibiting high PP, high storage capacity, low PCT slope, low hysteresis and potentially low cost.

Other materials that can be used in the system can be comprising a La content of from 0.65/5.97 to 0.75/5.97 based on the atomic composition of the metal alloy material, a Ce content of from 0.25/5.97 to 0.35/5.97 based on the atomic composition of the metal alloy material, and a Ni content of from 4.90/5.97 to 5.00/5.97 based on the atomic composition of the metal alloy material. In this or a still further aspect according to the present disclosure, there is provided a metal alloy material for use in the MHC system 100 as defined in the claims.

In a further aspect according to the present disclosure, there is provided a method of manufacturing a metal alloy material as defined in any one of claims 9 to 11. The method comprises the following steps:
a) melting the respective elements and the binary alloy Fe-V at a temperature ranging from 900 °C to 2000 °C, optionally by arc-melting or induction melting methods under protective atmosphere in vacuum and/or argon gas,
b) cooling the resulting melt to yield a bulk metal-alloy material,
c) crushing the bulk metal alloy material to produce metal alloy material particles using a first type of crusher, and
d) separating particles having a particle size of less than 1 mm and storing the separated particles in protective gas atmosphere.

The method may further comprise repeating steps c) and d) using a second type of crusher
Melting the respective alloys and/or binary alloys at a temperature as indicated above allows for a homogeneous atom distribution throughout the envisaged alloy. For example, arc-type melting (arcing) works by the application of alternating current to an electrode, which can be arranged so as to generate an arc discharged inside a furnace. The heat produced by arcing can cause residues on the metal bases/alloys/binary alloys to melt. Arcing can generate such a high temperature that even residues containing metal can be melted evenly within a short time.

Similarly, induction melting can be used and provides advantages including an energy-efficient heating, thus using less power to heat the same amount of material. A further advantage of induction heating is that it only heats the target area. The electromagnetic field generated by an induction heater only penetrates the surface of the material being heated, meaning that no heat is lost to the surrounding area and making induction heating more efficient than other methods. Furthermore, induction heating also provides precise heating. The electromagnetic field can be tightly controlled, making it easy to heat a small area to a high temperature without affecting the surrounding area. This makes induction heating ideal for applications where precise heating is required. Furthermore, induction heating is also a safe and clean method of heating thus suitable for the melting of alloys, wherein specific metal ratios and minimization of residues is essential.

In order to ensure precise alloy composition, every element and/or binary alloy that is used for the manufacturing can be weighed precisely according to the desired original alloy composition to be used in the MHC system 100. After melting, a representative sample can be tested with conventional chemical analysis which can include phasmatography and other precise methods such as X-ray fluorescence spectroscopy, optical emission spectroscopy etc. If the analysis shows the target atomic composition with ±0.01 for each element, then it is considered as successful. If not, adjustments are made in order to achieve the desired atomic composition tolerance of ±0.01.

With respect to the PCT diagrams, a Pressure Composition Temperature (PCT) apparatus, also known as Sieverts apparatus, can be used to characterize the manufactured and/or used and/or activated alloys. In such an apparatus, under a constant water-bath temperature, the applied pressure can be varied, and a new equilibrium pressure can be recorded and the hydrogen concentration in NLiters/kg (Normal Liters H₂ per kg of MH) can be calculated based on the hydrogen pressure differences. In that way measurements can be performed having a precision for pressures of ±0.1bar, for temperatures ±0.1⁰C, and for hydrogen concentrations of ±0.5NLiters/kg.

Metal alloy material surfaces can be unavoidably "dirty" (Figure 6A) from physisorbed and chemisorbed species, such as H₂O, OH-, O=, -CH₂- and other organic and inorganic species existing in the atmosphere or in contact with the metal alloy material during manufacturing (e.g. as detailed above), processing, application etc. Therefore, activation of metal alloy material surfaces is needed. Such activation can include cleaning of the existing "dirty" metal alloy material surface from physisorbed moisture by vacuum and/or creating a new "clean" metal alloy material surface by heat under vacuum or in the presence of H₂ gas.

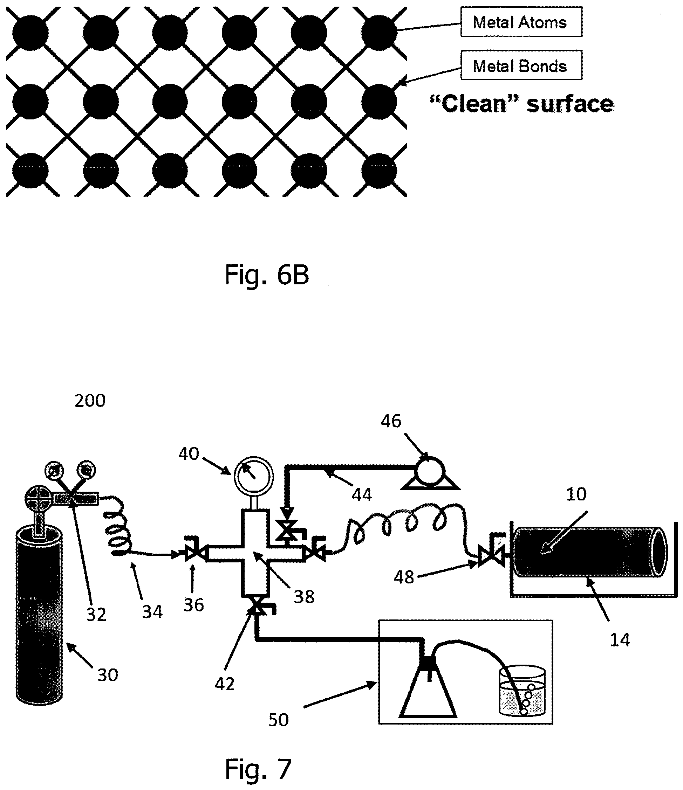

A "clean" surface is active (Figure 6B), because at the surface "half" of the "metal bonds" are free seeking to bind with species which come in immediate contact with it. Such "activated" surfaces are suitable to absorb (via bonding) hydrogen at lower pressures (at moderate temperature) and desorb (via breaking of bonds) hydrogen at higher pressure (at elevated temperature).

Figure 7 shows an exemplary activation system 200 for the metal alloys presented herein. The activation system 200 is configured to be connected to the MHC system 100 of Figure 1 and, in more detail, to the metal alloy-containing tanks 10 thereof. As such, the metal alloys will be activated after having been loaded into the tanks 10.

The exemplary activation system 200 of Figure 7 comprises a hydrogen source 30, e.g. a source of hydrogen fluid or a hydrogen-comprising fluid. The hydrogen source 30 is configured to provide a sufficient hydrogen concentration and a sufficient hydrogen pressure depending on the size and the configuration of the activation system 200 and the MHC system 100.

The hydrogen source 30 is provided with an optional pressure regulator 32. The regulator 32 is configured to increase and decrease the pressure of the fluid provided by the hydrogen source 30. Downstream of the hydrogen source 30 an optional pressure booster 34 is provided. The pressure booster 34 is configured to increase the fluid pressure (e.g., up to 15 to 800 bar). A hydrogen supply valve 36 is provided downstream of the hydrogen source 30 and the pressure booster 34. The valve 36 can assume an open and a closed position. Furthermore, the valve can in some implementations also assume a semi-open and semi-closed position in order to adjust the stream of hydrogen.

The activation system 200 further comprises a vacuum/hydrogen manifold system 38. The manifold system 38 can range from simple supply chambers with one several outlets, to multi-chambered flow control units. They are typically used to divide one supply input to multiple outputs (e.g. one output per tank 10 comprised by the MHC system 100). A more complex manifold system 38 can incorporate integral valves or an electronic network interface. The manifold system 38 is configured to distribute a large fluid stream into several parallel streams and, as an option, then to collect them into one discharge stream. Suitable manifolds 38 include the following types: dividing, combining, Z-type, U-type manifolds, and combinations thereof.

The activation system 200 also comprises a pressure measurement device 40, optionally connected to the manifold system 38 and/or being part of a pressure controller (not shown). The pressure measurement device 40, e.g. a pressure sensor, is a device suitable for pressure measurement of gases or liquids. Pressure is an expression of the force required to stop a fluid from expanding, and is usually stated in terms of force per unit area. A pressure sensor usually acts as a transducer; it generates a signal as a function of the pressure imposed. Pressure sensors can be realized as pressure transducers, pressure transmitters, pressure indicators, piezometers and manometers, etc.

The activation system 200 further comprises a discharging valve 42, optionally connected to the manifold system 38. The discharging valve 42 is configured to discharge a fluid, such as (pressurized) hydrogen gas from the tanks 10. The hydrogen gas may be discharged via an optional water bubbling/trap system 50 coupled via a discharging line to the discharging valve 42.

The activation system 200 also comprises a vacuum line 44 connected to a vacuum pump 46. In the configuration illustrated in Fig. 7, the vacuum line 44 is connected to the manifold system 38. A unit valve 48 is configured to selectively connect the manifold system 38 and one or more of a plurality of metal-alloy containing tanks 10 via a connecting line. Depending on the configuration of the manifold system 38, either one of the vacuum source 30, the vacuum pump 46 and the discharging valve 42 may be coupled to an individual one of the tanks 10.

Figure 7 also illustrates the jacket 14 configured for at least one of heating and cooling the plurality of metal-alloy containing tanks 10, as explained above with reference to Figure 1. The jacket 14 can be configured to accommodate a cold (i.e. < 20 °C) and a hot (i.e. 50-100 °C) medium such as water for cooling or heating the tanks 10. Alternatively or in addition, the hot and cold medium can also be provided to a coil 16 (see Figure 1) located inside in the individual tanks 10 to further accelerate the heating/cooling of the metal alloy material in the tanks 10.

The activation system 200 is configured to activate the metal alloy material inside the MHC system 100 as defined in the claims (i.e. inside the separate tanks 10). The activation process as defined in the claims comprises in one embodiment the following steps:
a) providing the respective metal alloy material inside the metal-alloy containing tanks 10 (e.g. as explained above with reference to Figure 1),
b) starting the vacuum pump 46 to apply vacuum at a pressure level of less than 10⁻² bar for a period of 5 minutes or more (e.g. for at least 20 or at least 30 minutes),
c) supplying a heating medium such as hot water to the jacket(s) 14 and/or coil(s) 16 to heat the metal-alloy containing tanks 10 to a temperature ranging from 50 °C to 100 °C,
d) introducing hydrogen from the hydrogen source 30 into the metal-alloy containing tanks 10 at a pressure ranging from 1 bar to 600 bar, and
e) supplying a cooling medium such as cold water to the jacket(s) 14 and/or coil(s) 16 to cool the metal-alloy containing tanks 10 to a temperature of 20 °C or lower.

Between steps a) and b), the individual tanks 10 may be connected to the vacuum/high-pressure H₂ manifold system 38 (preferably using 1/16- or 1/8- or 1/4-inch stainless steel tubing. Step b) may serve to remove air and clean the surface of the metal alloy material particles from any physisorbed species such as moisture (H₂O) and other gases. Step b) may be continued while introducing or circulating, in step c), a hot medium (e.g. between 50 to 100 °C, in particular 70 to 85 °C) through the water-jacket and/or the inside coil 16 for more than 5 minutes (e.g. for at least 20 or at least 30 minutes). Thereby, the metal alloy surface of the metal alloy material particles can be further cleaned from any physisorbed species such as moisture (H₂O) and other gases. Furthermore, any chemisorbed species left (such as -OH, -O groups) can thereby be forced to react with a small portion of a metallic surface of the metal alloy material particles and form incoherent grains of stable oxides/hydroxides, thus creating, at the same time, clean/activated surfaces readily accessible and available for bulk hydrogen absorption, especially at lower temperatures.

While under vacuum at high temperature, an individual tank 10 may in step d) be charged with a hydrogen gas pressure of for example 1 to 600 bar or more, such as 5 to 400 bar or 10 to 200 bar (the pressure booster 34 may be used for pressures of more than 150 bar). The suitable hydrogen gas pressure level may depend on the structural strength of MCH system 100 and the activation system 200 and the chemical composition of the metal alloy material (e.g. whether it is a low- or a high-pressure material). In some cases, the activation process may be performed individually per tank 10 and based on activation parameters (e.g. activation temperature and hydrogen gas pressure) specifically selected for the specific metal alloy material contained in a particular one of the tanks 10.

Under high-pressure and high-temperature conditions, it is usually expected that secondary phases can be incoherently decomposed into stable hydrides. The secondary phases can be rich in La, Ce, Zr, Ti, V and existing in small amounts in the material (e.g. La-Ce-Ni hydrides or Zr-Ti-V hydrides as defined herein). These secondary phases can thus transform into stable hydrides (La-Ce-hydrides, Zr-Ti-V-hydrides) and elemental transition metals (Ni, Cr, Mn, Co, Fe). Such a phase transformation can create at the same time clean (i.e. activated) surfaces.

While under high hydrogen pressure and heated, the hot medium can in step e) be replaced by a cooler medium (e.g. 20 ⁰C or lower, such as 10 ⁰C or lower) and a large drop in the hydrogen supply pressure can be observed at the pressure measurement device 40, indicating that activation of the metal alloy material has been achieved.

In case such an activation cannot yet be observed, the thermal activation cycle (under continuing high hydrogen pressure) can be continued by repeatedly switching from the hot to the cold medium for every about 10-30 minutes (e.g. every 15 minutes). After 3-6 cycles, most of the hydrogen gas can typically be removed, for example through the water bubbling/trap system 50 to a low pressure of between 1.2 and 5 bar, and a vacuum may be applied via the vacuum pump 46 to remove all remaining hydrogen under hot-medium conditions for about 10-30 minutes (e.g. 15 minutes).

Subsequently, the cold medium (e.g. having a temperature below 20 °C or below 10 ⁰C) may be introduced under vacuum and the appropriate hydrogen pressure can be applied (e.g. 1 to 600 bar) while observing the pressure at pressure measurement device 40. A large pressure drop can reveal that activation is achieved and the metal alloy material absorbs hydrogen. The systems 100, 200 (including, e.g., the tanks 10) can be left under hydrogen pressure and low medium temperature overnight (for example for 6 hours or more, 8 hours or more, 12 hours or more) in order to achieve a full activation. In this regard, the amount of hydrogen stored can be calculated from the pressure drop in the hydrogen source 30 and volume of the hydrogen source 30 (e.g. cylinder volume) as follows:$\left(Volume of {H}_{2} at {25}^{∘}C in liters\right) = \left(pressure drop in bar\right) * \left(cylinder volume in liters\right)$

As has become apparent from the above description of exemplary embodiments, the metal alloy material presented herein provides in certain compositions one or more of an improved PP, improved storage capacity, improved PCT slope, improved hysteresis and potentially lower cost while providing improved hydrogen compressing properties (e.g., in terms of achieving a higher output pressure).

Specifically, the metal alloy materials of the present disclosure and provided by the manufacturing and activation processes of the present disclosure can result in materials in which a majority of the surface of the metal alloy material surface is not occupied with chemisorbed or physisorbed species. Therefore, the MHC system 100 provides superior absorption capacities, and thus increased amounts of hydrogen can possibly be stored due to the accessible surface area.

The metal alloy materials having defined ratios of La/Ce/Ni or Zr/Cr/Mn/Co/Fe/V as presented herein can efficiently be employed for compressing hydrogen due to their improved ad- and desorption properties depending on the temperature of the material. The atomic ratios of the metal alloy materials presented herein allow for fine-tuning the ad- and desorption properties of the materials, depending on the applied temperature and/or desired application.

Specifically, the La/Ce/Ni alloys permit the absorption of hydrogen at very low pressures at moderate temperature (e.g. 5 °C to 20 °C, preferably 10 °C), while allowing to increase the pressure of the desorbed hydrogen (at elevated temperature, e.g. 70 °C to 99 °C, preferably 80 °C) significantly. Subsequently, hydrogen desorbed from, e.g., at least one La/Ce/Ni alloy that can be used in the system according to the present disclosure having a pressure of for example from 20 to 30 bar can be used in a subsequent step of the MHC system 100 to absorb at moderate temperature on Zr/Cr/Mn/Co/Fe/V-type alloys according to the present disclosure as defined in the claims, while efficiently using the increased pressure.

## Claims

1. A metal hydride compressing system (100) for compressing hydrogen, the system (100) comprising:
a plurality of metal-alloy containing tanks (10) each having at least one hydrogen port, the tanks (10) being interconnected via their hydrogen ports in a sequential configuration;
one or more members (14, 16) configured for at least one of heating and cooling the plurality of metal-alloy containing tanks (10), wherein
one of the sequentially arranged metal-alloy containing tanks (10) is containing a metal alloy material consisting of Ti, Zr, Cr, Fe and V,
the content of Ti in the metal alloy material is from 0.83/3.00 to 0.87/3.00 based on the atomic composition of the metal alloy material and the content of V in the metal alloy material is from 0.05/3.00 to 0.23/3.00 based on the atomic composition of the metal alloy material; and
wherein the metal alloy material is produced using the binary alloys Fe-V, and/or Fe-Ti, and/or Fe-Zr.

2. The metal hydride compressing system according to claim 1, wherein the one of the sequentially arranged metal-alloy containing tanks (10) is containing a metal alloy material comprising Ti, Zr, Cr, Fe and V, wherein the content of Ti in the metal alloy material is 0.85/3.00 based on the atomic composition of the metal alloy material.

3. The metal hydride compressing system according to claim 1 or 2, wherein the one of the sequentially arranged metal-alloy containing tanks (10) is containing a metal alloy material having the formula Ti_{0.85}Zr_{0.15}Cr_{0.95}Fe_{0.95}V_{0.10}.

4. The metal hydride compressing system according to any preceding claim, wherein the metal-alloy containing tanks (10) comprise, preferably consist of six subsequently connected tanks and the sixth tank is containing a metal alloy material having essentially the formula Ti_{0.85}Zr_{0.15}Cr_{0.95}Fe_{0.95}V_{0.10} and the fifth tank is containing a metal alloy material having essentially the formula Ti_{0.80}Zr_{0.20}Cr_{0.95}Fe_{1.00}V_{0.05}.

5. The metal hydride compressing system according to claim 4, wherein the first metal-alloy containing tank (10) is containing a metal alloy material having essentially the formula La_{0.70}Ce_{0.30}Ni_{4.97}.

6. The metal hydride compressing system according to claim 4 or 5, wherein the third metal-alloy containing tank (10) is containing a metal alloy material having essentially the formula Ti_{0.95}Zr_{0.05}Cr_{1.20}Mn_{0.60}Co_{0.20}, and/or
wherein the second metal-alloy containing tank (10) is containing a metal alloy material having essentially the formula Ti_{0.90}Zr_{0.10}Cr_{0.90}Mn_{1.00}V_{0.10}.

7. The metal hydride compressing system according to any preceding claim, suitable for providing hydrogen at a pressure up to 550 bar, wherein water having a temperature ranging from 5 °C to 95 °C is provided in the one or more members configured for at least one of heating and cooling the plurality of metal-alloy containing tanks.

8. The metal hydride compressing system according to claim 4, wherein
a. the sixth metal-alloy containing tank (10) is containing a metal alloy having the atomic composition Ti_{0.85}Zr_{0.15}Cr_{0.95}Fe_{0.95}V_{0.10}, optionally wherein
b. the first metal-alloy containing tank (10) is containing a metal alloy having essentially the atomic composition La_{0.70}Ce_{0.30}Ni_{4.97}, optionally wherein
c. the third metal-alloy containing tank (10) is containing a metal alloy having essentially the atomic composition Ti_{0.95}Zr_{0.05}Cr_{1.20}Mn_{0.60}Co_{0.20}, optionally wherein
d. the second metal-alloy containing tank (10) is containing a metal alloy having essentially the atomic composition Ti_{0.20}Zr_{0.10}Cr_{0.90}Mn_{1.00}V_{0.10}, optionally wherein
e. the fourth metal-alloy containing tank (10) is containing a metal alloy having the atomic composition Ti_{0.80}Zr_{0.20}Cr_{0.95}Fe_{0.95}V_{0.10}.

9. Use of a metal alloy material in the metal hydride compressing system (100) according to any one of claims 1 to 8, wherein said metal alloy material is contained in one of the sequentially arranged metal-alloy containing tanks (10) as defined in claim 1, the metal alloy material consisting of Ti, Zr, Cr, Fe and V and comprising
a. a Ti content of from 0.83/3.00 to 0.87/3.00 based on the atomic composition of the metal alloy material,
b. a Zr content of from 0.05/3.00 to 0.25/3.00 based on the atomic composition of the metal alloy material,
c. a Cr content of from 0.85/3.00 to 1.30/3.00 based on the atomic composition of the metal alloy material,
d. a V content of from 0.05/3.00 to 0.23/3.00 based on the atomic composition of the metal alloy material, and
e. a combined content of two or more of Mn, Co, Fe and V of 0.70/3.00 to 1.20/3.00 based on the atomic composition of the metal alloy material,
wherein the metal alloy material is produced using the binary alloy Fe-V.

10. The use according to claim 9,
wherein the metal alloy material is in the form of particles having a particle size ranging from 0.1 mm to 5 mm, preferably ranging from 0.5 mm to 2.5 mm, further preferably ranging from 0.7 mm to 1 mm, and/or
wherein at least 50 %, preferably at least 75 %, further preferably at least 85 % of the surface of the particles is not occupied with chemisorbed or physisorbed species.

11. The use according to claim 9 or 10, wherein the metal alloy material has essentially the atomic composition
a. Ti_{0.90}Zr_{0.10}Cr_{0.90}Mn_{1.00}V_{0.10}, or
b. Ti_{0.95}Zr_{0.05}Cr_{1.20}Mn_{0.60}Co_{0.20}, or
c. Ti_{0.80}Zr_{0.20}Cr_{0.95}Fe_{0.95}V_{0.10}, or
d. Ti_{0.80}Zr_{0.20}Cr_{0.95}Fe_{1.00}V_{0.05}, or
e. Ti_{0.85}Zr_{0.15}Cr_{0.95}Fe_{0.95}V_{0.10}.

12. A method of manufacturing a metal alloy material as defined in any one of claims 9 to 11, the method comprising:
a. melting the respective elements and the binary alloy Fe-V at a temperature ranging from 900 °C to 2000 °C, optionally by arc-melting or induction melting methods under protective atmosphere in vacuum and/or argon gas,
b. cooling the resulting melt to yield a bulk metal-alloy material,
c. crushing the bulk metal alloy material to produce metal alloy material particles using a first type of crusher,
d. separating particles having a particle size of less than 1 mm and storing the separated particles in protective gas atmosphere, and
e. repeating steps c and d using a second type of crusher.

13. The method according to claim 12, wherein a first type of crusher is a jaw type crusher, and/or wherein the second type of crusher is a roller-crusher set, and/or
wherein the protective gas atmosphere is an atmosphere that is at least one of argon-rich and nitrogen-rich, preferably wherein the protective gas atmosphere consists essentially of argon gas, and/or
wherein the particles are separated by sieving.

14. An activation process of metal alloy material inside a metal hydride compressing system (100) of any one of claims 1 to 8, the activation process comprising:
a. providing the metal alloy material inside a metal-alloy containing tank (10),
b. applying vacuum at a pressure level of less than 10⁻² bar for a period of 5 minutes or more,
c. heating the metal-alloy containing tank (10) to a temperature ranging from 50 °C to 100 °C,
d. introducing hydrogen into the metal-alloy containing tank (10) at a pressure ranging from 1 bar to 600 bar, and
e. cooling the metal-alloy containing tank (10) to a temperature of 20 °C or lower.

15. The activation process according to claim 14, wherein the process further comprises:
f. thermal cycling of the metal-alloy containing tank (10), the thermal cycling comprising heating the metal-alloy containing tank (10) to a temperature ranging from 50 °C to 100 °C and cooling the metal-alloy containing tank (10) to a temperature of 20 °C or lower, wherein, as an option, each heating and cooling step proceeds for 10 minutes to 30 minutes, preferably 15 minutes.

16. The activation process according to claim 14 or claim 15, wherein vacuum is applied in step b for a period of 10 minutes or more, preferably 20 minutes or more, further preferably 30 minutes or more, and/or
wherein vacuum is applied at a pressure level of less than 10⁻² bar, preferably less than 0.5*10⁻² bar, further preferably less than 10⁻³ bar, and/or
wherein the hydrogen is introduced into the metal-alloy containing tank (10) at a pressure ranging from 50 bar to 400 bar, preferably 100 bar to 250 bar, further preferably, wherein the hydrogen is introduced into the metal-alloy containing tank (10) using a pressure booster (34).

## Patentansprüche

1. Metallhydrid-Kompressionssystem (100) zum Komprimieren von Wasserstoff, wobei das System (100) umfasst:
eine Vielzahl von Tanks (10), die eine Metalllegierung enthalten und jeweils mindestens einen Wasserstoffanschluss aufweisen, wobei die Tanks (10) über ihre Wasserstoffanschlüsse in einer Reihenanordnung miteinander verbunden sind;
eine oder mehrere Komponenten (14, 16), die zum Erwärmen und/oder Kühlen der mehreren Tanks (10), die eine Metalllegierung enthalten, ausgelegt sind, wobei
einer der in Reihe angeordneten Tanks (10), die eine Metalllegierung enthalten, ein Metalllegierungsmaterial enthält, bestehend aus Ti, Zr, Cr, Fe und V,
wobei der Ti-Gehalt in dem Metalllegierungsmaterial bezogen auf die atomare Zusammensetzung des Metalllegierungsmaterials zwischen 0,83/3,00 und 0,87/3,00 liegt und der V-Gehalt in dem Metalllegierungsmaterial bezogen auf die atomare Zusammensetzung des Metalllegierungsmaterials zwischen 0,05/3,00 und 0,23/3,00 liegt; und
wobei das Metalllegierungsmaterial unter Verwendung der binären Legierungen Fe-V und/oder Fe-Ti und/oder Fe-Zr hergestellt wird.

2. Metallhydrid-Kompressionssystem nach Anspruch 1, wobei einer der nacheinander angeordneten Tanks (10), die eine Metalllegierung enthalten, ein Metalllegierungsmaterial enthält umfassend Ti, Zr, Cr, Fe und V, wobei der Gehalt an Ti in dem Metalllegierungsmaterial bezogen auf die atomare Zusammensetzung 0,85/3,00 beträgt.

3. Metallhydrid-Kompressionssystem nach Anspruch 1 oder 2, wobei der eine der in Reihe angeordneten Tanks (10), die eine Metalllegierung enthalten, ein Metalllegierungsmaterial mit der Formel Ti_{0,85}Zr_{0,15}Cr_{0,95}Fe_{0,95}V_{0,10} enthält.

4. Metallhydrid-Kompressionssystem nach einem der vorstehenden Ansprüche, wobei die Tanks (10), die eine Metalllegierung enthalten, sechs in Reihe verbundene Tanks umfassen, vorzugsweise aus diesen bestehen, und der sechste Tank ein Metalllegierungsmaterial mit im Wesentlichen der Formel Ti_{0,85}Zr_{0,15}Cr_{0,95}Fe_{0,95}V_{0,10} enthält und der fünfte Tank ein Metalllegierungsmaterial mit im Wesentlichen der Formel Ti_{0,80}Zr_{0,20}Cr_{0,95}Fe_{1,00}V_{0,05} enthält.

5. Metallhydrid-Kompressionssystem nach Anspruch 4, wobei der erste Tank (10), der eine Metalllegierung enthält, ein Metalllegierungsmaterial enthält, das im Wesentlichen die Formel La_{0,70}Ce_{0,30}Ni_{4,97} aufweist.

6. Metallhydrid-Kompressionssystem nach Anspruch 4 oder 5, wobei der dritte Tank (10), der eine Metalllegierung enthält, ein Metalllegierungsmaterial enthält, das im Wesentlichen die Formel Ti_{0,95}Zr_{0,05}Cr_{1,20}Mn_{0,60}Co_{0,20} aufweist, und/oder
wobei der zweite Tank (10), der eine Metalllegierung enthält, ein Metalllegierungsmaterial enthält, das im Wesentlichen die Formel Ti_{0,90}Zr_{0,10}Cr_{0,90}Mn_{1,00}V_{0,10} aufweist.

7. Metallhydrid-Kompressionssystem nach einem der vorstehenden Ansprüche, das zur Bereitstellung von Wasserstoff bei einem Druck von bis zu 550 bar geeignet ist, wobei Wasser mit einer Temperatur im Bereich von 5 °C bis 95 °C in der einen oder den mehreren Komponenten bereitgestellt wird, die zum Erwärmen und/oder Kühlen der mehreren Tanks, die eine Metalllegierung enthalten, ausgelegt sind.

8. Metallhydrid-Kompressionssystem nach Anspruch 4, wobei
a. der sechste Tank (10), der eine Metalllegierung enthält, eine Metalllegierung mit der atomaren Zusammensetzung Ti_{0,85}Zr_{0,15}Cr_{0,95}Fe_{0,95}V_{0,10} enthält, wobei optional
b. der erste Tank (10), der eine Metalllegierung enthält, eine Metalllegierung mit im Wesentlichen der atomaren Zusammensetzung La_{0,70}Ce_{0,30}Ni_{4,97} enthält, wobei optional
c. der dritte Tank (10), der eine Metalllegierung enthält, eine Metalllegierung mit im Wesentlichen der atomaren Zusammensetzung Ti_{0,95}Zr_{0,05}Cr_{1,20}Mn_{0,60}Co_{0,20} enthält, wobei optional
d. der zweite Tank (10), der eine Metalllegierung enthält, eine Metalllegierung mit im Wesentlichen der atomaren Zusammensetzung Ti_{0,90}Zr_{0,10}Cr_{0,90}Mn_{1,00}V_{0,10} enthält, wobei optional
e. der vierte Tank (10), der eine Metalllegierung enthält, eine Metalllegierung mit der atomaren Zusammensetzung Ti_{0,80}Zr_{0,20}Cr_{0,95}Fe_{0,95}V_{0,10} enthält.

9. Verwendung eines Metalllegierungsmaterials in dem Metallhydrid-Kompressionssystem (100) nach einem der Ansprüche 1 bis 8, wobei das Metalllegierungsmaterial in einem der in Reihe angeordneten Tanks (10), die eine Metalllegierung enthalten, nach Anspruch 1 enthalten ist, wobei das Metalllegierungsmaterial aus Ti, Zr, Cr, Fe und V besteht und folgendes umfasst:
a. einen Ti-Gehalt von 0,83/3,00 bis 0,87/3,00, bezogen auf die atomare Zusammensetzung des Metalllegierungsmaterials,
b. einen Zr-Gehalt von 0,05/3,00 bis 0,25/3,00, bezogen auf die atomare Zusammensetzung des Metalllegierungsmaterials,
c. einen Cr-Gehalt von 0,85/3,00 bis 1,30/3,00, bezogen auf die atomare Zusammensetzung des Metalllegierungsmaterials,
d. einen V-Gehalt von 0,05/3,00 bis 0,23/3,00, bezogen auf die atomare Zusammensetzung des Metalllegierungsmaterials, und
e. einen Gesamtgehalt von zwei oder mehr von Mn, Co, Fe und V von 0,70/3,00 bis 1,20/3,00, bezogen auf die atomare Zusammensetzung des Metalllegierungsmaterials,
wobei das Metalllegierungsmaterial unter Verwendung der binären Legierung Fe-V hergestellt wird.

10. Verwendung nach Anspruch 9,
wobei das Metalllegierungsmaterial in Form von Partikeln vorliegt mit einer Partikelgröße im Bereich von 0,1 mm bis 5 mm, vorzugsweise im Bereich von 0,5 mm bis 2,5 mm, noch bevorzugter im Bereich von 0,7 mm bis 1 mm liegt, und/oder
wobei mindestens 50 %, vorzugsweise mindestens 75 %, noch bevorzugter mindestens 85 % der Oberfläche der Partikel nicht mit chemisorbierten oder physisorbierten Spezies belegt ist.

11. Verwendung nach Anspruch 9 oder 10, wobei das Metalllegierungsmaterial im Wesentlichen die folgende atomare Zusammensetzung aufweist
a. Ti_{0,90}Zr_{0,10}Cr_{0,90}Mn_{1,00}V_{0,10}, oder
b. Ti_{0,95}Zr_{0,05}Cr_{1,20}Mn_{0,60}Co_{0,20}, oder
c. Ti_{0,80}Zr_{0,20}Cr_{0,95}Fe_{0,95}V_{0,10}, oder
d. Ti_{0,80}Zr_{0,20}Cr_{0,95}Fe_{1,00}V_{0,05}, oder
e. Ti_{0,85}Zr_{0,15}Cr_{0,95}Fe_{0,95}V_{0,10}.

12. Verfahren zur Herstellung eines Metalllegierungsmaterials wie in einem der Ansprüche 9 bis 11 definiert, wobei das Verfahren umfasst:
a. Schmelzen der jeweiligen Elemente und der binären Legierung Fe-V bei einer Temperatur im Bereich von 900 °C bis 2000 °C, optional durch Lichtbogenschmelzen oder Induktionsschmelzen unter Schutzatmosphäre in Vakuum und/oder Argongas,
b. Abkühlen der resultierenden Schmelze, um ein massives Metalllegierungsmaterial zu erhalten,
c. Zerkleinern des massiven Metalllegierungsmaterials unter Verwendung einer ersten Art von Brecher, um Metalllegierungsmaterialpartikel herzustellen,
d. Abtrennen von Partikeln mit einer Partikelgröße von weniger als 1 mm und Lagern der abgetrennten Partikel in einer Schutzgasatmosphäre, und
e. Wiederholen der Schritte c und d unter Verwendung einer zweiten Art von Brecher.

13. Verfahren nach Anspruch 12, wobei eine erste Art von Brecher ein Backenbrecher ist und/oder wobei die zweite Art von Brecher eine Walzenbrecheranlage ist und/oder
wobei die Schutzgasatmosphäre eine Atmosphäre ist, die zumindest entweder argonreich oder stickstoffreich ist, vorzugsweise wobei die Schutzgasatmosphäre im Wesentlichen aus Argongas besteht, und/oder
wobei die Partikel durch Sieben abgetrennt werden.

14. Aktivierungsverfahren für Metalllegierungsmaterial innerhalb eines Metallhydrid-Kompressionssystems (100) nach einem der Ansprüche 1 bis 8, wobei das Aktivierungsverfahren umfasst:
a. Bereitstellen des Metalllegierungsmaterials in einem Tank (10), der eine Metalllegierung enthält,
b. Anlegen eines Vakuums bei einem Druckniveau von weniger als 10⁻² bar für einen Zeitraum von 5 Minuten oder länger,
c. Erwärmen des Tanks (10), der eine Metalllegierung enthält, auf eine Temperatur im Bereich von 50 °C bis 100 °C,
d. Einleiten von Wasserstoff in den Tank (10), der eine Metalllegierung enthält, bei einem Druck im Bereich von 1 bar bis 600 bar, und
e. Abkühlen des Tanks (10), der eine Metalllegierung enthält, auf eine Temperatur von 20 °C oder weniger.

15. Aktivierungsverfahren nach Anspruch 14, wobei das Verfahren ferner umfasst:
f. thermisches Zyklisieren des Tanks (10), der eine Metalllegierung enthält, wobei das thermische Zyklisieren das Erwärmen des Tanks (10), der eine Metalllegierung enthält, auf eine Temperatur im Bereich von 50 °C bis 100 °C und das Abkühlen des Tanks (10), der eine Metalllegierung enthält, auf eine Temperatur von 20 °C oder weniger umfasst, wobei optional jeder Erwärmungs- und Abkühlungsschritt 10 Minuten bis 30 Minuten, vorzugsweise 15 Minuten, dauert.

16. Aktivierungsverfahren nach Anspruch 14 oder Anspruch 15, wobei in Schritt b ein Vakuum für einen Zeitraum von 10 Minuten oder mehr, vorzugsweise 20 Minuten oder mehr, noch bevorzugter 30 Minuten oder mehr, angelegt wird, und/oder
wobei das Vakuum bei einem Druckniveau von weniger als 10⁻² bar, vorzugsweise weniger als 0,5*10⁻² bar, noch bevorzugter weniger als 10⁻³ bar angelegt wird, und/oder
wobei der Wasserstoff bei einem Druck im Bereich von 50 bar bis 400 bar, vorzugsweise 100 bar bis 250 bar, in den Tank (10), der eine Metalllegierung enthält, eingeleitet wird, noch bevorzugter, wobei der Wasserstoff unter Verwendung eines Druckverstärkers (34) in den Tank (10), der eine Metalllegierung enthält, eingeleitet wird.

## Revendications

1. Système de compression à hydrures métalliques (100) destiné à comprimer de l'hydrogène, le système (100) comprenant:
une pluralité de réservoirs (10) contenant un alliage métallique, chacun comportant au moins un orifice pour l'hydrogène, les réservoirs (10) étant raccordés entre eux par leurs orifices pour l'hydrogène selon une configuration en série;
un ou plusieurs éléments (14, 16) conçus pour assurer au moins l'une fonction parmi le chauffage et le refroidissement de la pluralité de réservoirs (10) contenant l'alliage métallique, dans lequel
l'un des réservoirs (10) contenant l'alliage métallique disposés en série contient un matériau en alliage métallique composé de Ti, Zr, Cr, Fe et V,
la teneur en Ti dans le matériau alliage métallique est comprise entre 0,83/3,00 et 0,87/3,00 sur la base de la composition atomique du matériau en alliage métallique et la teneur en V dans le matériau d'alliage métallique est comprise entre 0,05/3,00 et 0,23/3,00 sur la base de la composition atomique du matériau en alliage métallique; et
dans lequel le matériau en alliage métallique est produit à partir des alliages binaires Fe-V, et/ou Fe-Ti, et/ou Fe-Zr.

2. Système de compression à hydrures métalliques selon la revendication 1, dans lequel l'un des réservoirs (10) contenant l'alliage métallique, disposés en série, contient un matériau en alliage métallique comprenant du Ti, du Zr, du Cr, du Fe et du V, la teneur en Ti du matériau en alliage métallique étant de 0,85/3,00 par rapport à la composition atomique du matériau en alliage métallique.

3. Système de compression à hydrures métalliques selon la revendication 1 ou 2, dans lequel l'un des réservoirs (10) contenant l'alliage métallique, disposés en série, contient un matériau en alliage métallique représenté par la formule Ti_{0,85}Zr_{0,15}Cr_{0,95}Fe_{0,95}V_{0,10}.

4. Système de compression à hydrures métalliques selon l'une quelconque revendication précédente, dans lequel les réservoirs (10) contenant l'alliage métallique comprennent, de préférence, six réservoirs raccordés les uns à la suite des autres, et le sixième réservoir contient un matériau en alliage métallique représenté essentiellement par la formule Ti_{0,85}Zr_{0,15}Cr_{0,95}Fe_{0,95}V_{0,10} et le cinquième réservoir contient un matériau en alliage métallique représenté essentiellement par la formule Ti_{0,80}Zr_{0,20}Cr_{0,95}Fe_{1,00}V_{0,05}.

5. Système de compression à hydrures métalliques selon la revendication 4, dans lequel le premier réservoir (10) contenant l'alliage métallique contient un matériau en alliage métallique représenté essentiellement par la formule La_{0,70}Ce_{0,30}Ni_{4,97}.

6. Système de compression à hydrures métalliques selon la revendication 4 ou 5, dans lequel le troisième réservoir (10) contenant l'alliage métallique contient un matériau en alliage métallique représenté essentiellement par la formule Ti_{0,95}Zr_{0,05}Cr_{1,20}Mn_{0,60}Co_{0,20}, et/ou
dans lequel le deuxième réservoir (10) contenant l'alliage métallique contient un matériau en alliage métallique représenté essentiellement par la formule Ti_{0,90}Zr_{0,10}Cr_{0,90}Mn_{1,00}V_{0,10}.

7. Système de compression à hydrures métalliques selon l'une quelconque revendication précédente, adapté pour fournir de l'hydrogène à une pression pouvant atteindre 550 bars, dans lequel de l'eau dont la température est comprise entre 5°C et 95°C est placée dans un ou plusieurs éléments conçus pour assurer au moins l'une fonction parmi le chauffage ou le refroidissement de la pluralité de réservoirs contenant l'alliage métallique.

8. Système de compression à hydrures métalliques selon la revendication 4, dans lequel
a. le sixième réservoir (10) contenant l'alliage métallique contient un alliage métallique dont la composition atomique est Ti_{0,85}Zr_{0,15}Cr_{0,95}Fe_{0,95}V_{0,10}, éventuellement, dans lequel
b. le premier réservoir (10) contenant l'alliage métallique contient un alliage métallique dont la composition atomique est essentiellement La_{0,70}Ce_{0,30}Ni_{4,97}, éventuellement, dans lequel
c. le troisième réservoir (10) contenant l'alliage métallique contient un alliage métallique dont la composition atomique est essentiellement Ti_{0,95}Zr_{0,05}Cr_{1,20}Mn_{0,60}Co_{0,20}, éventuellement, dans lequel
d. le deuxième réservoir (10) contenant l'alliage métallique contient un alliage métallique dont la composition atomique est essentiellement Ti_{0,90}Zr_{0,10}Cr_{0,90}Mn_{1,00}V_{0,10}, éventuellement, dans lequel
e. le quatrième réservoir (10) contenant l'alliage métallique contient un alliage métallique dont la composition atomique est Ti_{0,80}Zr_{0,20}Cr_{0,95}Fe_{0,95}V_{0,10}.

9. Utilisation d'un matériau en alliage métallique dans le système de compression à hydrures métalliques (100) selon l'une quelconque des revendications 1 à 8, dans lequel ledit matériau en alliage métallique est contenu dans l'un des réservoirs (10) contenant l'alliage métallique et disposés en série, tels que définis dans la revendication 1, l'alliage métallique étant constitué de Ti, Zr, Cr, Fe et V et comprenant
a. une teneur en Ti comprise entre 0,83/3,00 et 0,87/3,00, sur la base de la composition atomique de l'alliage métallique,
b. une teneur en Zr comprise entre 0,05/3,00 et 0,25/3,00, sur la base de la composition atomique du matériau en alliage métallique,
c. une teneur en Cr comprise entre 0,85/3,00 et 1,30/3,00, sur la base de la composition atomique du matériau en alliage métallique,
d. une teneur en V comprise entre 0,05/3,00 et 0,23/3,00, sur la base de la composition atomique du matériau en alliage métallique, et
e. une teneur combiné d'au moins deux éléments parmi Mn, Co, Fe and V comprise entre 0,70/3,00 et 1,20/3,00, sur la base de la composition atomique du matériau en alliage métallique,
dans lequel le matériau en alliage métallique est produit à l'aide de l'alliage binaire Fe-V.

10. Utilisation selon la revendication 9,
dans laquelle le matériau en alliage métallique se présente sous forme de particules dont la taille est comprise entre 0,1 mm et 5 mm, de préférence entre 0,5 mm et 2,5 mm, plus préférentiellement entre 0,7 mm et 1 mm, et/ou
dans lequel au moins 50 %, de préférence au moins 75 %, plus préférentiellement au moins 85 % de la surface des particules n'est pas occupée par des espèces chimisorbées ou physisorbées.

11. Utilisation selon la revendication 9 ou 10, dans laquelle le matériau en alliage métallique présente essentiellement la composition atomique:
a. Ti_{0,90}Zr_{0,10}Cr_{0,90}Mn_{1,00}V_{0,10}, ou
b. Ti_{0,95}Zr_{0,05}Cr_{1,20}Mn_{0,60}Co_{0,20}, ou
c. Ti_{0,80}Zr_{0,20}Cr_{0,95}Fe_{0,95}V_{0,10}, ou
d. Ti_{0,80}Zr_{0,20}Cr_{0,95}Fe_{1,00}V_{0,05}, ou
e. Ti_{0,85}Zr_{0,15}Cr_{0,95}Fe_{0,95}V_{0,10}.

12. Procédé de fabrication d'un matériau en alliage métallique selon l'une quelconque des revendications 9 à 11, le procédé comprenant:
a. la fusion des éléments respectifs et de l'alliage binaire Fe-V à une température comprise entre 900°C et 2 000°C, éventuellement par fusion à l'arc ou fusion par induction sous atmosphère protectrice, sous vide et/ou sous argon,
b. le refroidissement de la masse fondue ainsi obtenue afin d'obtenir un matériau en alliage métallique massif,
c. le broyage du matériau en alliage métallique afin de produire des particules de matériau en alliage métallique à l'aide d'un concasseur d'un premier type,
d. la séparation des particules dont la taille est inférieure à 1 mm et le stockage des particules séparées sous atmosphère protectrice, et
e. la répétition des étapes c et d à l'aide d'un deuxième type de concasseur.

13. Procédé selon la revendication 12, dans lequel un premier type de concasseur est un concasseur à mâchoires, et/ou dans lequel le deuxième type de concasseur est un ensemble de concasseurs à rouleaux, et/ou
dans lequel l'atmosphère protectrice est une atmosphère qui est au moins l'une parmi une atmosphère riche en argon et une atmosphère riche en azote, de préférence l'atmosphère protectrice étant constituée essentiellement d'argon, et/ou
dans lequel les particules sont séparées par tamisage

14. Procédé d'activation d'un matériau en alliage métallique à l'intérieur d'un système de compression à hydrures métalliques (100) selon l'une quelconque des revendications 1 à 8, le procédé d'activation comprenant:
a. l'introduction du matériau en alliage métallique à l'intérieur d'un réservoir (10) contenant l'alliage métallique,
b. l'application d'un vide à une pression inférieure à 10⁻² bars pendant une durée d'au moins 5 minutes,
c. le chauffage du réservoir (10) contenant l'alliage métallique à une température comprise entre 50°C et 100°C,
d. l'injection d'hydrogène dans le réservoir (10) contenant l'alliage métallique à une pression comprise entre 1 bar et 600 bars, et
e. le refroidissement du réservoir (10) contenant l'alliage métallique à une température inférieure ou égale à 20°C.

15. Procédé d'activation selon la revendication 14, dans lequel le procédé comprend en outre:
f. le cyclage thermique du réservoir (10) contenant l'alliage métallique, le cyclage thermique consistant à chauffer le réservoir (10) contenant l'alliage métallique à une température comprise entre 50°C et 100°C et à refroidir le réservoir (10) contenant l'alliage métallique à une température inférieure ou égale à 20°C, chaque étape de chauffage et de refroidissement pouvant, éventuellement, durer de 10 à 30 minutes, de préférence 15 minutes.

16. Procédé d'activation selon la revendication 14 ou la revendication 15, dans lequel un vide est appliqué à l'étape b pendant une durée de 10 minutes ou plus, de préférence 20 minutes ou plus, plus préférentiellement 30 minutes ou plus, et/ou
dans lequel un vide est appliqué à un niveau de pression inférieur à 10⁻² bars, de préférence inférieur à 0.5*10⁻² bars, plus préférentiellement inférieur à 10⁻³ bars, et/ou
dans lequel l'hydrogène est introduit dans le réservoir (10) contenant l'alliage métallique à une pression comprise entre 50 bars et 400 bars, de préférence entre 100 bars et 250 bars, plus préférentiellement, dans lequel l'hydrogène est introduit dans le réservoir (10) contenant l'alliage métallique à l'aide d'un surpresseur (34).
